# EUROPEAN PATENT SPECIFICATION

(11) **EP 3 437 313 B1**
(45) Date of publication and mention of the grant of the patent: **26.02.2020**
(21) Application number: 17714732.9
(22) Date of filing: 30.03.2017
(51) Int. Cl.: H04M 3/42, H04M 15/00, H04W 4/24, H04M 3/22

(54) **METHOD AND SYSTEM FOR DETECTION OF INTERCONNECT BYPASS USING TEST CALLS TO REAL SUBSCRIBERS**
VERFAHREN UND SYSTEM ZUR ERKENNUNG EINER VERBINDUNGSUMGEHUNG UNTER VERWENDUNG VON TESTANRUFEN BEI ECHTEN TEILNEHMERN
PROCÉDÉ ET SYSTÈME DE DÉTECTION DE DÉRIVATION D'INTERCONNEXION UTILISANT DES APPELS DE TEST À DES ABONNÉS RÉELS

(30) Priority: 31.03.2016 EP 16163224
(43) Date of publication of application: 06.02.2019
(60) Divisional application: 19214044.0
(73) Proprietor: SIGOS BVBA, 9050 Gent-Ledeberg (BE)
(72) Inventor: VAN DER MEEREN, Guy, 9052 Zwijnaarde (Gent) (BE); VERLINDE, Dirk, 8200 Sint-Andries (BE); MIRZABAYOV, Nijat, 9000 Gent (BE)
(74) Representative: IP HILLS NV
(86) International application number: PCT/EP2017/057577
(87) International publication number: WO 2017/167900

(56) References cited:
- EP-A1- 2 671 372
- US-A1- 2006 045 248
- US-A1- 2009 061 860
- US-A1- 2012 021 720
- US-A1- 2014 349 641

## Description

### Field of the Invention

The present invention generally relates to detecting the presence of an interconnect bypass in communication networks, in particular in wireless telecommunication networks such as for example Global System for Mobile communications (GSM) networks, Universal Mobile Telecommunications System (UMTS) networks, or similar wireless telecommunication networks, but also in wired telecommunication networks or Voice over Internet Protocol (VoIP) networks. Such an interconnect bypass is also called a Subscriber Identity Module box (SIMbox), an interconnect gateway or GSM gateway, or a leaky Private Branch eXchange (leaky PBX).

The present invention in particular concerns improved detection of interconnect bypass in a controlled environment using test calls, i.e. calls made on purpose from a certain origin at a certain time with the aim to detect fraud. This is achieved by the appended independent claims. Dependent claims constitute embodiments of the invention. Any other embodiment of the description not covered by the appended claims is to be considered as not being part of the present invention.

### Background of the Invention

When a telecommunication network operator provides access from his network to a network of another telecommunication network operator and vice versa, both operators, by means of agreement or sometimes subject to regulatory requirements, set up a suitable interconnection facility which is subjected to extensive testing in order to assess the technical reliability and the quality of service of the interconnection facility such that agreed upon or regulatory standards are met. In addition to the technical arrangements there are in many cases also interconnection charges that the telecommunication network operator receiving a call charges for the calls passing through the interconnection facility. When a calling party calls from another telecommunication network to the network of the telecommunication network operator of the receiving party, for example because the calling party is a client of a network operator different from the receiving network operator or because the calling party is travelling abroad and is making use of the network of a partnering network operator that provides roaming services to its own network operator, this call has to pass through the interconnection facility.

An interconnect bypass attempts to bypass the interconnection facilities of the network operator thereby avoiding at least part of the interconnection charges. These attempts are made by bypass operators that reroute a part of the traffic of calling parties within the network of another operator to the network of the receiving operator without going through the interconnection facility. Generally these bypass operators make use of end user facilities from the receiving operator, i.e. subscriptions represented by Subscriber Identity Module (SIM) cards, that are exploited to inject off-net calls as on-net calls in the receiving operator's network. In other cases, end user facilities of another operator, different from the receiving operator, may be used, e.g. in case such calls cost less than the normally applicable interconnection charges.

Interconnect bypass leads to a direct loss of revenue for the receiving network operator. In addition, interconnect bypass leads to technical problems. Indeed, the bypass operator uses end user facilities to provide a network interconnection. The use of these end user facilities involves the setup of a new call and the creation of an additional interface. As a consequence, there is a serious risk for quality problems such as degraded quality of audio or data transmissions, interruptions during the call, prolonged waiting time during the call initiation, unacceptable delays in the audio or data transmissions, etc. Furthermore, because a bypass operator reroutes an off-net call by setting up a new on-net call making use of end user facilities in the receiving operator's network, the Calling Line Identification (CLI) of the calling party in the off-net call will be replaced with the CLI of the misused end user facility in the signalling of the new on-net call. This leads to inconveniences for the receiving party which receives an erroneous CLI as a result of which services like caller recognition fail, and can also have more serious consequences for safety when for instance a call is made to emergency services, police services or other services that may use the CLI for identity or location tracking purposes. Furthermore, interconnect bypass also creates serious technical difficulties for automated telephone switchboards that operate on the basis of the CLI of the incoming call.

Consequently, there is a demand from network operators for adequate systems or solutions to identify end user facilities like SIM cards that are used by bypass operators in order to enable the operator to promptly stop the use of such end user facilities.

A first type of solutions to detect the presence of an interconnect bypass is implemented in a so called Fraud Management System (FMS). An FMS collects and analyzes the Call Detail Records (CDRs) received from a network operator and/or call signalling in order to detect subscriptions with suspicious behaviour that is typical for an interconnect bypass. Suspicious behaviour, i.e. call characteristics that may indicate interconnect bypass activity like for instance the absence of incoming calls, an abnormally high rate of outgoing phone calls, absence of messaging like ingoing/outgoing SMS messages, a high call diversity, i.e. a high ratio between the number of different destinations called versus the total number of destinations called, e.g. higher than 80 %, etc., is reported by the FMS to enable the operator to deactivate one or more subscriptions that are suspected of being used by a bypass operator. Such an FMS is for instance described in United States Patent Application US 2009/0069047 entitled "Methods, Systems, and Computer Program Products for Detecting Wireless Bypass in a Communications Network".

FMS requires a high number of events in order to obtain statistically relevant measures as a consequence of which its bypass detection latency is rather high.

Also United States Patent Application US 2006/0045248 entitled "Method of Telecommunications Call Record Correlation Providing a Basis for Quantitative Analysis of Telecommunications Call Traffic Routing" describes a system that relies on CDRs of real subscriber calls, i.e. real calls from a real subscriber to a real subscriber the origin, route and timing of which cannot be controlled. The system of US 2006/0045248 correlates the CDRs of random calls in order to identify matching CDRs, i.e. tuples of corresponding originating and terminating CDRs. See paragraphs [0101]-[0111] of US 2006/0045248. Thereafter, as described in paragraph [0112], the system compares the calling line identifiers (CLIs) in the matching CDRs in order to detect interconnect bypass.

The technique known from US 2006/0045248 is limited because its starting point is a random set of real subscriber calls, the origin, route and timing of which cannot be controlled. If the set does not contain calls from Turkmenistan, it will be impossible to detect an interconnect bypass on routes from Turkmenistan. It might even be impossible to know the true origin of a call in the system known from US 2006/0045248.

A second type of solutions to detect the presence of an interconnect bypass relies on Test Call Generation or TCG. A test call platform comprises probes or robots in communications networks of plural operators, schedules and executes test calls between these probes, and analyzes the received CLI in the tests calls in order to detect bypass operations. TCG brings the advantage of a controlled environment: test calls are made from a certain origin at a certain time on purpose to detect bypass fraud preferably on suspicious routes. Such test call platform is for instance described in the European patent application EP 2671372 A1 entitled "A System for Detection of a Bypass of an Interconnect to a Telecommunication Network". In order to detect a bypass of an interconnect to a telecommunication network, such TCG platform schedules and executes a test call to the telecommunication network from outside the telecommunication network, more precisely to a receiver probe with a subscription for terminating the test call. The TCG system hence comprises a control system configured to initiate such test call from a certain origin, for instance a sender probe, to receive from the receiver probe call information comprising a received CLI of the test call, and to analyse the received CLI such that presence of the bypass can be detected. Such TCG system does not require an interface with the CDR database of an operator as it obtains the received CLI of the test call from the receiver probe.

One problem with these systems that make use of test calls is that they are exposed to the risk of counter-detection due to the specific behaviour of the calling pattern of the test calls, and the volume of test calls. To avoid connection costs, the test calls are normally not picked up. Typically, the test calls are also performed according to a fixed pattern of start time, ringing duration, etc., which may cause suspicion with a bypass operator. Another problem is that the subscriptions used to originate test calls and the subscriptions that terminate test calls may originate or terminate a large number of calls, such volume being also suspicious. This creates the risk that the bypass operators can detect and identify the subscriptions used for originating the test calls and/or the subscriptions used for receiving the test calls. The bypass operator can then subsequently blacklist these subscriptions in order to avoid bypass activity on test calls and as a consequence thereof avoid being detected. In order to be effective against such anti-detection measures taken by bypass operators, parts of the system for making test calls, such as for example the receiver probe or the means for originating test calls or the subscriptions or virtual numbers used to receive the test calls, could be reconfigured extensively, for example by providing them with new subscriptions for receiving or generating test calls. This however is a slow process, which casts money and may require physical intervention such as for example replacing a SIM card.

In order to mitigate the risk for counter-detection of test calls by bypass operators, European Patent Application EP 2 509 294 A1 entitled "A Telecommunication network bypass Detection System with Reduced Counter Detection Risk" describes a TCG platform wherein a large set of virtual numbers is used to terminate test calls at a single receiver probe. Different embodiments are described for constitution of the set of virtual numbers (mix of reused and unused numbers, non-consecutive numbers, numbers of multiple geographical zones or having different prefixes, etc.) and for the order wherein the virtual numbers or subsets of the virtual numbers (rotating, random rotating, etc.) can be used by the receiving probe.

The use of virtual numbers however is not free of problems. Due to internal fraud with the operator(s) of telecommunication network(s), e.g. a malicious employee who is knowledgeable on the list of virtual numbers and who is paid money by a bypass operator to disclose company confidential information, the list of virtual numbers may be disclosed to bypass operators which in this way have another possibility to blacklist the virtual numbers for bypass activity. An evident measure to complicate such internal fraud resides in regular replacement of the virtual numbers, e.g. monthly replacement of all virtual numbers by a new set of virtual numbers, but this requires discipline with the network operators that monthly have to allocate and configure for instance 500 numbers in case 5 test SIMs are each assigned 100 virtual numbers.

Another disadvantage of virtual numbers is that they will not appear on the white list of bypass operators who may focus bypass activity to only subscriber numbers on such white list generated and maintained by the bypass operator, e.g. a list of real subscribers that have a normal pattern of incoming international calls: for instance real subscriber numbers that regularly receive international traffic of varying duration, including sometimes calls of long duration, etc. Numbers used for test calls normally do not appear on such white list because numbers are selected that usually have not been used for some time, and only a minority of subscribers receive regular international calls such that when test numbers are selected randomly, only few of them will be on such white list. Bypass operators who concentrate their bypass activity on such white list consequently will not be detected when test calls are made to numbers used for test calls. Furthermore, it is difficult to make test numbers appear on such white list because bypass operators may look at a long history and it is expensive to establish a normal international traffic pattern.

It is worth noticing that a TCG platform further runs the risk that an inadvertent call made by a legitimate subscriber to one of the probes at a point in time whereon a test call is expected to arrive at this probe, i.e. a so called interfering call, will be considered to originate from an interconnect bypass as a result of which the legitimate subscription will be deactivated.

False positive bypass detections also occur in traditional FMS platforms since bypass operators implement anti-detection measures that artificially adapt their call behaviour to make it resemble normal subscribers behaviour.

International Patent Application WO 2012/003514 entitled "Advanced Predictive Intelligence for Terminating Bypass Detection and Prevention" or its equivalent United States Patent Application US 2012/0021720 A1 describes a TCG system wherein test calls are made to real subscriber numbers, thus avoiding the use of numbers or virtual numbers that are temporarily exclusively allocated to a receiving test probe and that are vulnerable to detection by bypass operators. WO 2012/003514 foresees a so called PI Gateway that facilitates forwarding the test call destined to a real subscriber number to a local number controlled by the PI Gateway such that the received CLI can be analysed. Operation of the PI gateway is described from page 14, line 28 to page 17, line 4 in WO 2012/003514. The system known from WO 2012/003514 hence relies on a dedicated gateway, the PI gateway, where the signalling (e.g. SS7 signalling) is routed to such that the PI gateway can manage only the test call for forward to the local number whereas all other calls different from the test call are allowed to be terminated as usual at the real subscriber number.

The PI gateway from WO 2012/003514 is an additional piece of hardware that must be installed in the signalling path of the telecommunication network. Such PI gateway is complex to install and configure, and constitutes an additional point of failure in the operators network that must be trusted by the operator.

### Summary of the Invention

It is an objective of the present invention to disclose an improved method and system for detection of interconnect bypass using test calls wherein the drawbacks of existing solutions addressed above are resolved or mitigated. More particularly, it is an objective to disclose a TCG method and system with reduced risk for black- and/or white-listing by bypass operators but which does not require the installation and configuration of a gateway or alternate equipment in the signalling path of a telecommunication network. It is a further objective to increase the effectiveness of test call based bypass detection, i.e. to increase the detection rate of bypass activity, also in case the bypass activity is concentrated on a white list of numbers maintained by the bypass operator. It is a further objective to maintain a high detection rate over a longer period of weeks or even months without substantial manual interventions such as the regular replacement of large sets of virtual numbers used by test call receiving probes.

According to the present invention, the above mentioned objectives are realized by a method for detection of a bypass of an interconnect to a telecommunication network as defined by claim 1, the method comprising:
- generating a test call to or through a real subscriber number of a real subscriber active in the telecommunication network;
- obtaining call data from a test probe whereto the real subscriber number of the real subscriber is temporarily forwarded during a time interval wherein the test call is made, the call data being reported by the test probe and including a received calling line identifier corresponding to the calling line identifier that would have been received by the real subscriber if its number was not configured in call forward mode;
- extracting a received calling line identifier for the test call from the call data comprising extracting the received calling line identifier from the call data reported by the test probe; and
- detecting presence of a bypass by analysis of the received calling line identifier, by verifying if the received calling line identifier belongs to the numbering plan of the telecommunication network wherein the test call is received, or by verifying the country code, or by establishing that the received calling line identifier does not correspond to the calling line identifier of an origin of the test call.

Thus, the bypass detection method according to the invention relies on test calls to numbers of real subscriber, in the context of the present invention called "real subscriber numbers". These numbers may be randomly selected or may be selected more intelligently from a list of real subscriber numbers obtained from the operator. Anyhow, the test calls to such real subscriber numbers are difficult to detect by bypass operators that implement counter-detection measures because the real subscriber number that is used for a test call will typically not be blacklisted: the real subscriber number receives an occasional single test call and may then even be excluded for test calls for some time. Even if it would be blacklisted as a result of a detected test call, such counter-detection measure would be ineffective because the amount of real subscriber numbers that can be used for test calls is huge and so is the number of potential test routes: the system according to the present invention is no longer dependent on a limited list of virtual numbers or a list that may be leaked to the bypass operator as a result of which the bypass operator can avoid bypass activity on routes to these virtual numbers and remain undetected. Further, the real subscriber numbers used for test calls will appear on white lists of bypass operators. In particular if the real subscriber numbers are intelligently chosen - e.g. real subscribers that frequently receive international calls - the probability that the real subscriber numbers used for test calls also appear on the white list that a bypass operator is managing for his bypass activity, is high. The use of test calls by the method according to the present invention further brings the advantage that control is kept over the origin of the test calls, as a result of which the CLI or portions of the CLI that must be received by the receiving test probe are known, and control is kept over the timing of the test calls. The latter is important as the method according to the invention further must obtain the received calling line identifier for the test call. The received CLI is obtained from a test probe whereto the real subscriber number is temporarily forwarded during a time interval wherein the test call takes place. It is noticed that the received CLI in this case refers to the CLI that would have been received by the real subscription if its number was not configured in call forward mode. Since the real subscriber number is temporarily put in call forward mode, the real subscription actually does not receive any CLI. It is however assumed that the CLI does not change as a result of the call forward as a result of which the test probe will receive this CLI and will be able to report this CLI to the test call platform. During such time interval, which preferably is as short as possible to minimize the service interruption for the real subscriber and to minimize the risk that interfering calls from genuine subscribers to the real subscriber terminate to the test probe, the real subscriber number is forwarded to the test probe. The forward shall preferably be an unconditional call forward to reduce the time needed for the test call, although the present invention is not limited thereto and may cover variants such as call forward on no reply or other call forward modes. The signalling of calls to the real subscriber number is not re-routed and/or monitored and/or intercepted during the time interval of the test. Consequently, no gateway needs to be installed in the signalling path of the telecommunication network.

In embodiments of the method for detection of a bypass of an interconnect to a telecommunication network according to the present invention, defined by claim 2, call data are obtained from a test probe in the telecommunication network whereto the real subscriber number of the real subscriber is temporarily forwarded during a time interval wherein the test call is made without intercepting the signalling of calls to the real subscriber number at a gateway.

Indeed, the method according to the present invention relies on information received from a receiver probe whereto to real subscriber number is temporarily forwarded. The call forward does not involve intercepting signalling as a result of which not only the test call but also interfering calls to the real subscriber number in the time interval will be forwarded to the receiving probe. The method according to the present invention hence involves discriminating the calling line identifier received as a result of the test call from calling line identifiers received as a result of interfering calls, and therefore may rely on timing information. Once the calling line identifier received as a result of the test call has been identified, this calling line identifier can be analysed to determine if bypass activity took place on the test call. The use of call forwarding to a receiver probe has as advantage that no access is required to CDRs or signalling information of the operator of the real subscriber number. The downside is that the real subscriber must temporarily be configured in call forward mode, for a limited time interval wherein the test call will take place. This implies that the real subscriber's service will be interrupted, typically for a time interval of a few seconds up to a minute. It is assumed that the CLI is not changed by the call forwarding and that the CLI thus identifies the originating party of the call rather than the forwarding party. This is the case in most networks.

In embodiments of the method for detection of a bypass of an interconnect to a telecommunication network according to the present invention, defined by claim 3, temporarily forwarding the real subscriber number of the real subscriber to the test probe comprises:
- transmitting a command to a Home Location Register or Visited Location Register of the telecommunication network via an application programming interface of the telecommunication network wherein the command enables to configure call forwarding of the real subscriber number to the test probe.

Indeed, one way to temporarily configure the real subscriber number that will be addressed in the test call in call forward mode makes use of an API or application programming interface of the operator of the real subscriber. The operator may foresee such API to enable a third party responsible for scheduling, executing and analysing test calls for bypass detection to configure call forwarding in its HLR or Home Location Register for all its real subscribers or a selection of real subscribers.

In alternate embodiments of the method for detection of a bypass of an interconnect to a telecommunication network according to the present invention, defined by claim 4, temporarily forwarding the real subscriber number of the real subscriber to the test probe comprises:
- transmitting a specific USSD code from the test probe or any subscription managed by the test call system to a USSD gateway in the telecommunication network, accompanied by an identification of the real subscriber number, the specific USSD code triggering specific logic to configure call forwarding; and
- transmitting a command from the USSD gateway to a Home Location Register or Visited Location Register of the telecommunication network, wherein said command enables to configure call forwarding for the real subscriber number to the test probe, and
wherein the method further comprises transmitting instructions from the test probe to make the test call.

A USSD gateway or USSD server is a device present in GSM networks to receive and interpret USSD messages from GSM handsets. USSD is a real-time, session based protocol that conveys messages or commands to query information or to trigger services over GSM signalling channels. Advantageous embodiments of the present invention exploit the USSD protocol to enable a test probe whereto a real subscriber number must be forwarded temporarily, itself to instruct the call forwarding and to instruct execution of the test call. Thereto, a specific USSD code must be created, e.g. "*199#*", and this specific USSD code must be sent from the test probe (or any subscription managed by the test call system) to the USSD gateway together with an identification of the real subscriber number that must be configured in call forward mode to the test probe. The entire USSD message sent by the test probe to the USSD gateway may for instance be as follows:
*199#MSISDNa*#MSISDNb
Herein:
*199#* represents the specific USSD code that enables a third party, in this case the test probe, to request call forward to itself; and
MSISDNa represents the identification of the real subscriber whose number will temporarily be forwarded to the test probe sending the USSD message (or alternate subscription that receives the test call in case the USSD message is sent from a different subscription). To avoid misuse, use of the specific USSD code may be restricted to the test probe or to a limited number of subscriptions that are used by the test call system.

MSISDNb represents the subscription that will receive the test call. In case MSISDNb is the one that sends the USSD message, then it may not be necessary to include #MSISDNb in the USSD string as the USSD gateway will know that the USSD message was sent by MSISDNb.
Likely, the USSD message shall also contain an explicit mentioning of the subscription sending the USSD message. The USSD gateway in this embodiment of the present invention must be supplemented with logic able to interpret the specific USSD code, and able to instruct the Home Location Register to configure call forward for the real subscriber a to the test probe upon receipt of the specific USSD code. The USSD gateway thereto typically uses the SMPP protocol. Once this is done, the USSD gateway may confirm to the test probe via another USSD message that the call forwarding is configured for the real subscriber a, as a result of which the test probe can instruct to execute the test call, either directly to the origin of the test call or to the controller that schedules and monitors the test calls. The embodiment is advantageous because the test probe itself controls the timing of the call forwarding and test call execution as a result of which service interruption for the real subscriber can be minimized.

According to an optional aspect, defined by claim 5, the method for detection of a bypass according to the present invention further comprises:
- transmitting a specific call forward deactivation USSD code from the test probe or any subscription managed by the test call system to said USSD gateway after the test call; and
- transmitting a command from the USSD gateway to the Home Location Register or Visited Location Register of the telecommunication network, wherein the command enables to deactivate the call forwarding of the real subscriber number to the test probe.

Thus, in embodiments where a specific USSD is sent from the test probe to a USSD gateway to activate call forwarding, the test probe may send a second specific USSD code after the test call has taken place to instruct the USSD gateway to deactivate the call forward for the real subscriber whose number was used in the test call. The USSD gateway is adapted to interpret the second USSD code and to activate logic that commands the Home Location Register or Visited Location Register, e.g. via the SMPP protocol, to deactivate the call forwarding for the real subscriber number.

In further alternate embodiments of the method for detection of a bypass of an interconnect to a telecommunication network according to the present invention, defined by claim 6, temporarily forwarding the real subscriber number of the real subscriber to the test probe comprises:
- transmitting an SMS message with specific code from the test probe or any subscription managed by the test call system to an SMS server in the telecommunication network, accompanied by an identification of the real subscriber number; and
- transmitting a command from the SMS server to a Home Location Register or Visited Location Register of the telecommunication network, wherein the command enables to configure call forwarding for the real subscriber number to the test probe, and
wherein the method further comprises transmitting instructions from the test probe to make the test call.

Thus, similar to USSD messages, the present invention may be implemented using SMS messages. The test probe whereto a real subscriber number must be temporarily forwarded (or any subscription managed by the test call system) may send an SMS message with a specific code and identification of the real subscriber number that must be configured in call forward mode to the test probe. The SMS message is sent to an SMS service that hosts logic to interpret the SMS message and to instruct the Home Location Register to configure call forwarding for the real subscriber number. The test probe may be notified by the SMS service that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes, the test probe may send a second SMS message with second specific code indicating to the SMS service that the call forwarding for the real subscriber number involved in the test may be deactivated.

In further alternate embodiments of the method for detection of a bypass of an interconnect to a telecommunication network according the invention, defined by claim 7, temporarily forwarding the real subscriber number of the real subscriber to the test probe comprises:
- transmitting a command with specific code from the test probe or any subscription managed by the test call system to an Intelligent Network service in the telecommunication network, accompanied by an identification of the real subscriber number wherein the real subscriber number is a prepaid number; and
- transmitting a command from the Intelligent Network service to a Home Location Register or Visited Location Register of the telecommunication network, wherein the command enables to configure call forwarding for the real subscriber number to the test probe, and
wherein the method further comprises transmitting instructions from the test probe to make the test call.

Indeed, for prepaid numbers, the present invention may be implemented using an Intelligent Network service. The test probe whereto a real, prepaid subscriber number must be temporarily forwarded (or any subscription managed by the test call system) may send a message to an IN service with a specific code and identification of the real subscriber number that must be configured in call forward mode to the test probe. The message is sent to an IN service that hosts logic to interpret the message and to instruct the Home Location Register to configure call forwarding for the real, prepaid subscriber number. The test probe may be notified by the IN service that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes, the test probe may send a second message with second specific code indicating to the IN service that the call forwarding for the real, prepaid subscriber number involved in the test may be deactivated.

In further alternate embodiments of the method for detection of a bypass of an interconnect to a telecommunication network according to the present invention, defined by claim 8, wherein temporarily forwarding the real subscriber number of the real subscriber to the test probe comprises transmitting a command to a Home Location Register or Visited Location Register of the telecommunication network via a signalling server of the telecommunication network wherein the command enables to configure call forwarding of the real subscriber number to the test probe.

Thus, similar to USSD messages or SMS messages, the present invention may be implemented using signalling messages, for instance MAP signalling to activate the call forward. Indeed, also MAP signalling includes possibilities to change subscriber data. Whereas these possibilities are normally restricted to use within a network, they can be opened up to be used by an external party such as a test call system. Security mechanisms can be implemented to only allow such signalling messages from certain origins like a test call system. The test probe whereto a real subscriber number must be temporarily forwarded (or any subscription managed by the test call system) may send a signalling message with a specific code and identification of the real subscriber number that must be configured in call forward mode to the test probe. The signalling message is sent to a signalling server that hosts logic to interpret the signalling message and to instruct the Home Location Register to configure call forwarding for the real subscriber number. The test probe may be notified by the signalling server that the call forwarding is configured and the test probe may await this notification to transmit instructions for executing the test call. These instructions may be sent to the controller in the test platform or directly to the origin of the test call if the test probe is knowledgeable on the origin. Just like in the implementation with USSD codes or SMS, the test probe may send a second signalling message with second specific code indicating to the signalling server that the call forwarding for the real subscriber number involved in the test may be deactivated.

When the subscription coupled to the test probe is configured with a free phone profile, all calls forwarded thereto by real subscribers whose numbers are used for the test calls can be answered without connection costs. Answering the calls makes it possible to discriminate test calls from interfering calls because test calls can for instance be used to transfer a predetermined sequence of DTMF tones receipt of which can be verified by the receiving test probe.

It is noticed that interfering calls to the real subscriber during the time interval wherein call forwarding is configured for the real subscriber number may be answered with a message informing the caller that the subscriber he/she tried to call is temporarily not reachable. The caller consequently may be prompted to call back at a later time which improves the user experience in comparison to a situation where the receiving test probe does not pick-up the call or answers the call without play-back of a message.

According to yet another optional aspect defined by claim 9, the method for detection of a bypass of an interconnect to a telecommunication network according to the present invention further comprises:
- transmitting a specific code as part of a USSD command, SMS message, IN message or signalling message to respectively a USSD gateway, SMS server, IN service or signalling server to obtain the call forward state of the real subscriber number in order to be able to restore the call forward state or to abandon the test.

Indeed, before configuring call forward from a real subscriber number to the test probe, the method according to the invention preferably obtains and memorizes the call forward state, i.e. the type of call forward and the call forward number, such that the call forward state can be restored after the test call. This way, the real subscriber whose number is used for the test call will return to a state and settings identical to the ones before the call forward was configured.

Optionally, in the method for detection of a bypass of an interconnect to a telecommunication network according to the present invention, as defined by claim 10, temporarily forwarding the real subscriber to the test probe comprises either one of:
- forwarding the real subscriber number to the test probe for a limited, predetermined time interval;
- forwarding the real subscriber number to the test probe until the test call is completed; or
- forwarding the real subscriber number to the test probe until the test call is completed or a predetermined timer expires, whichever occurs first.

Thus, the time interval wherein calls are forwarded from the real subscriber number to the test probe may be a fixed time interval, e.g. 60 seconds, may be a time interval the length of which depends on when the test call is completed, or may be terminated by the test call until a certain timer of e.g. 60 seconds expires earlier. The first and third implementation have the advantage that the call forward cannot last endless in case the test call for some reason is not completed.

Further optionally, as defined by claim 11, embodiments of the method for detection of a bypass of an interconnect to a telecommunication network according to the present invention further comprise:
- selecting the real subscriber number of the real subscriber from an intelligent list of real subscribers received from the operator of the telecommunication network.

Following another optional aspect of the method for detection of a bypass of an interconnect to a telecommunication network according to the present invention, defined by claim 12, the intelligent list comprises one or more of:
- subscriber numbers of real subscribers of the telecommunication network that in recent past received an amount of international calls exceeding a certain threshold;
- recycled subscriber numbers of real subscribers of the telecommunication network that recently unsubscribed from the telecommunication network;
- subscriber numbers that form part of a new range of yet unused real subscriber numbers of the telecommunication network;
- subscriber numbers of real subscribers of the telecommunication network that were never before configured in call forward mode.

Real subscribers that recently made international calls have a higher chance to appear on white lists where bypass operators concentrate their activity on. Consequently, using such real subscribers that recently received international calls for test calls increases the probability that bypass activity will be detected via the test calls.

Real subscribers that recently unsubscribed can be used for test calls without service interruption for the subscriber who no longer uses this number. Such real subscriber numbers may still appear on white lists of bypass operators so the fact they recently unsubscribed does not affect the chances that bypass activity will take place on routes thereto.

Real subscriber numbers that form part of a new range of numbers and/or that are not yet assigned to subscribers and therefore yet unused, can be used for test calls without service interruption for any subscriber. Such new subscriber numbers will not yet appear on black lists of bypass operators so the chances that bypass activity will take place on routes thereto are unaffected.

Real subscriber numbers that were never before configured in call forward mode have the advantage that test efficiency is maximised as it may not be desirable to use real subscriber numbers that are in forward mode as this would require to retrieve and restore the original forward situation.

In embodiments of the method for detection of a bypass of an interconnect to a telecommunication network according to the present invention, defined by claim 13, certain high profile real subscribers of the telecommunication network have been removed from the intelligent list.

Indeed, although high profile subscribers such as a president, ministers, senators, major corporate clients, etc. may frequently receive international calls and therefore appear on white lists of bypass operators, one may wish to avoid temporarily interrupting the service for such high profile subscribers and therefore exclude them from the list of real subscriber numbers that is used for test calls.

The method for detection of a bypass of an interconnect to a telecommunication network according to the present invention, as defined by claim 14 further optionally comprises:
- sending a message to the real subscriber number to inform the real subscriber that his number will temporarily be out of service for a test.

This way, the real subscriber whose number is temporarily used for bypass detection based on test calls is made aware thereof. The real subscriber consequently knows that his number will be temporarily non-reachable.

The real subscriber may be consulted before his number is used for bypass detection and the real subscriber may be given the chance to approve or disapprove interrupting his service temporarily and using his number for a test call. Such consultation could be done by UUSD or SMS and could originate from the same subscription that also initiates the setting of the call forward mode.

To motivate the real subscriber to approve using his number for bypass detection or to compensate him/her, the subscriber may be given some reward after the test is completed. The reward may be a "thank you" message informing the subscriber that the test is over and his service is restored, or it may be a financial reward, e.g. a coupon, call credit, a rebate on his invoice, etc.

Still optionally, as defined by claim 15, the test probe in embodiments of the method for detection of a bypass of an interconnect to a telecommunication network according to the present invention may be a virtual probe installed on an appliance of the real subscriber.

The installation of a virtual test probe, i.e. a software application on a client device, removes the need for physical test probes whereto real subscriber numbers must be temporarily forwarded during the time interval wherein test calls are made, and avoids that test calls disturb the real subscriber in situations where calls to the real subscriber are terminated differently, e.g. in an Over-The-Top application or OTT application such as Viber. Indeed, a real subscriber may link his real subscriber number to an OTT account, e.g. his Viber number, to enable carriers to terminate incoming calls to the real subscriber at a lower cost. This may be useful for instance when the real subscriber is travelling abroad to avoid roaming costs for incoming calls. A test call to the real subscriber in such situation shall also be terminated at the subscribers Viber number in the Viber application, even if the real subscriber number is temporarily forwarded to a test probe. Consequently, the real subscriber will be disturbed by the test call terminated in his Viber application. Through installation of a virtual test probe on the real subscriber's device, i.e. a software application that recognizes and intercepts the incoming test call, one can avoid that the test call disturbs the real subscriber. It is noticed that the incoming test call can either arrive via the regular mobile network or via the data network, the latter for instance in case an Over-The-Top application or OTT application like Viber is running. The virtual test probe may be configured to extract the calling line identifier from the incoming test call and report this information to the test call platform for analysis, e.g. comparison with the local numbering plan, to detect bypass activity. Even in situations where calls are terminated traditionally, the installation of a virtual test probe brings the advantage that call forwarding must not be configured in the operators HLR/VLR but is inherent through interception of the call by such virtual test probe, and the advantage that no physical test probe, i.e. no additional hardware, is needed to implement the present invention.

In addition to a method as defined by claim 1, the present invention also relates to a system for detection of a bypass of an interconnect to a telecommunication network, defined by claim 16, the system comprising:
- means adapted to originate a test call to or through a real subscriber number of a real subscriber of the telecommunication network; and
- a control system configured to:
   - control initiation of the test call to or through the real subscriber number;
   - receive call data from a test probe whereto the real subscriber number of the real subscriber is temporarily forwarded during a time interval wherein the test call is made, the call data being reported by the test probe and including a received calling line identifier corresponding to the calling line identifier that would have been received by the real subscriber if its number was not configured in call forward mode;
   - extract a received calling line identifier for the test call from the call data comprising extracting the received calling line identifier from the call data reported by the test probe; and
   - detect presence of a bypass by analysis of the received calling line identifier, by verifying if the received calling line identifier belongs to the numbering plan of the telecommunication network wherein the test call is received, or by verifying the country code, or by establishing that the received calling line identifier does not correspond to the calling line identifier of an origin of the test call.

### Brief Description of the Drawings

Fig. 1 illustrates a first embodiment of the method and system for bypass detection according to the present invention;
Fig. 2 illustrates a second embodiment of the method and system for bypass detection according to the present invention;
Fig. 3 illustrates a third embodiment of the method and system for bypass detection according to the present invention;
Fig. 4 illustrates a fourth embodiment of the method and system for bypass detection according to the present invention;
Fig. 5 illustrates a fifth embodiment of the method and system for bypass detection according to the present invention;
Fig. 6 illustrates a sixth embodiment of the method and system for bypass detection according to the present invention;
Fig. 7 illustrates a seventh embodiment of the method and system for bypass detection according to the present invention;
Fig. 8 illustrates an eight embodiment of the method and system for bypass detection according to the present invention; and

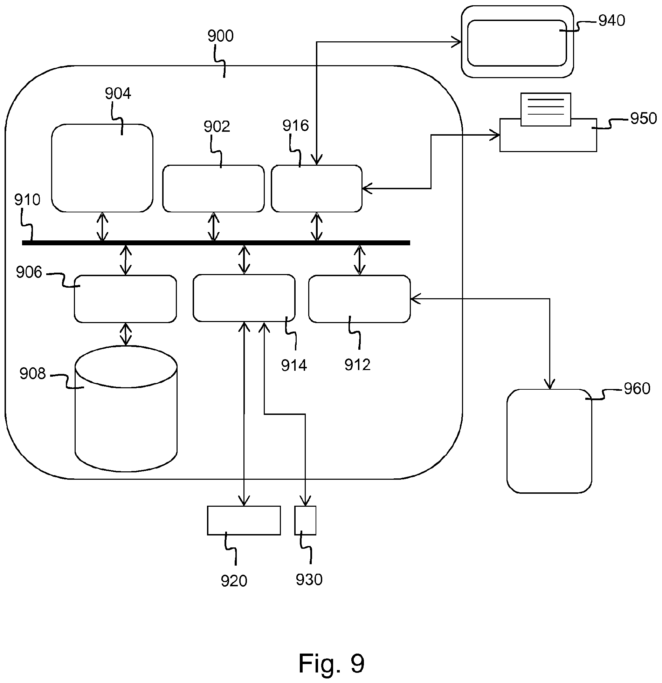

Fig. 9 illustrates a computing system suitable for hosting the system for bypass detection according to the present invention and suitable for implementing the method for bypass detection according to the present invention.

### Detailed Description of Embodiment(s)

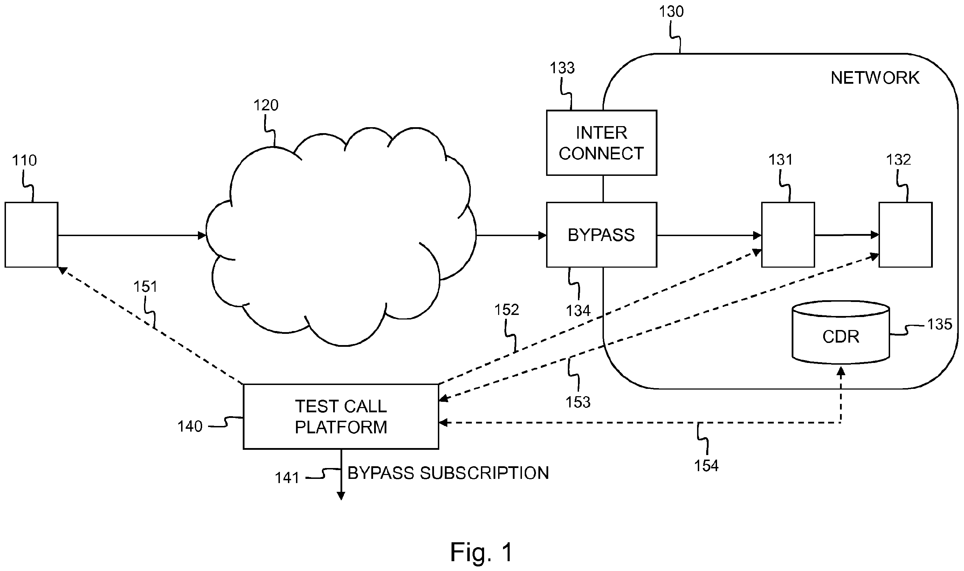

Fig. 1 shows a first embodiment of a system 140 for detection of a bypass 134 of an interconnect 133 to a telecommunication network 130 that operates according to the present invention. The system 140 is a test call platform or TCG system that schedules tests calls and instructs test probes to originate such test calls at specific time instances. In Fig. 1, test call platform 140 sends instructions 151 to test probe 110 to generate a test call at a specified time to a number of a real subscriber 131, the so called real subscription number of a real subscriber that is active in network 130 at the point in time the test call is made. The test call platform 140 further The off-net test call originating from test probe 110, e.g. an end-user facility 110 in a network different from the telecommunication network 130, e.g. a smartphone equipped with a SIM card making a call to a number of a real subscriber 131 in telecommunication network 130, i.e. its home network or a visited network, is supposed to pass through the interconnect facility 133 between the network where test probe 110 is located and network 130 or between any intermediate operator's network 120 and network 130. The bypass 134 however may intercept the call from test probe 110 to the number of the real subscriber 131, setup an on-net call from the bypass 134 to the real subscription 131 in the network 130.

After the test call is made, the test call platform 140 may consult the Call Data Record database or CDR database 135 of the network 130 in order to extract from the CDR stored for the test call the Calling Line Identifier or CLI received by the real subscription 131. This is indicated by 154 in Fig. 1. Thereupon, the CLI is analysed using known techniques to determine bypass from CLI analysis. If it belongs for instance to the numbering plan of network 130, test call platform 140 shall identify the subscription corresponding to that CLI as a bypass subscription 141 of bypass 134. The test call platform 140 reports such bypass subscription 141 to the operator of network 130 in order to enable the operator to deactivate such subscription.

Alternatively, the test call platform 140 may configure the real subscription 131 temporarily in call forward mode, as is indicated by 152 in Fig. 1. As a result, all calls to real subscription 131 will be forwarded to a test probe 132 in network 130 that is controlled by the test call platform. When the time interval is kept short and no interfering calls arrive at the real subscription 131, only the test call from test probe 110 to real subscription 131 is forwarded to test probe 132. Test probe 132 thereupon can be consulted by test call platform 140 such that test call platform 140 obtains the CLI received by test probe 132. This is indicated by 153 in Fig. 1. Again, the test call platform 140 can analyse the CLI, e.g. compare it with the numbering plan of the network 130 or country wherein the network 130 is located, to detect that the received CLI belongs to a bypass 134. If this is the case, the bypass subscription 141 is reported to the operator of network 130 to enable the operator to take this bypass subscription 141 out of operation.

It is noticed, that the test call platform 140 also may combine consulting the CDR database 135 with call forwarding from the real subscription 131 that is addressed on the test call to a test probe 132 under control of the test call platform 140.

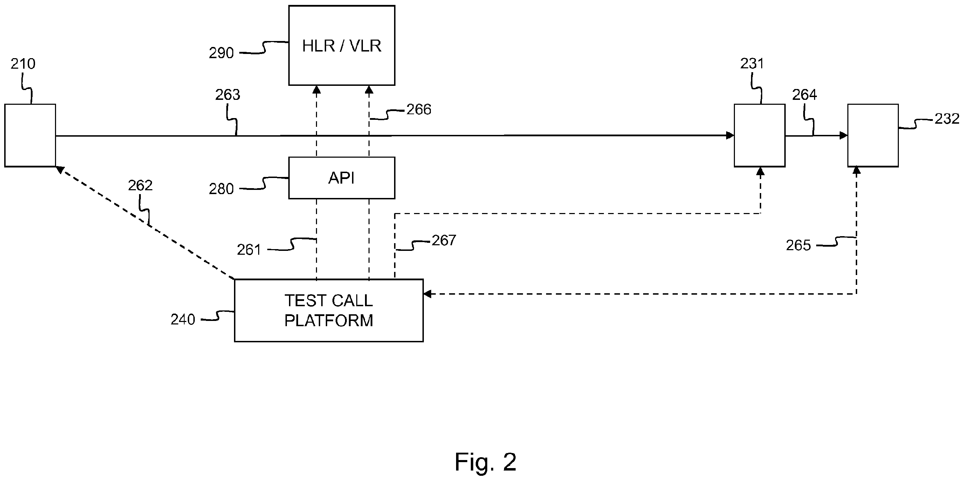

Fig. 2 illustrates an implementation of the system according to the invention wherein the test call platform 240 makes use of an application programming interface or API 280 to temporarily set call forwarding, for instance unconditional call forwarding, for real subscription 231 in the Home Location Register or HLR 290 of the operator of the real subscription 231. Via the API 280, the test call platform 240 sends instructions 261 to HLR 290 to activate unconditional call forward for real subscription 231 to the test probe 232. Thereafter, the test call platform 240 sends instructions 262 to probe 210 to initiate a test call 263 to real subscription 231. As a result of the call forward mode, the test call 263 will be forwarded to test probe 232. This is indicated by 264 in Fig. 2. The call forward preferably will be an unconditional call forward to reduce the time needed to perform the test call. After the test call 263, 264, the test probe 232 will report the received CLI to the test call platform 240, as indicated by 265, and the test call platform 240 will analyse the CLI to detect bypass activity. The test call platform 240 sends instructions 266 to HLR 290 to deactivate the call forwarding as soon as the test call is performed, and sends a message 267 to the real subscription 231 to inform the subscription that its number is again reachable, and eventually reward the subscriber of that real subscription 231 with some credit.

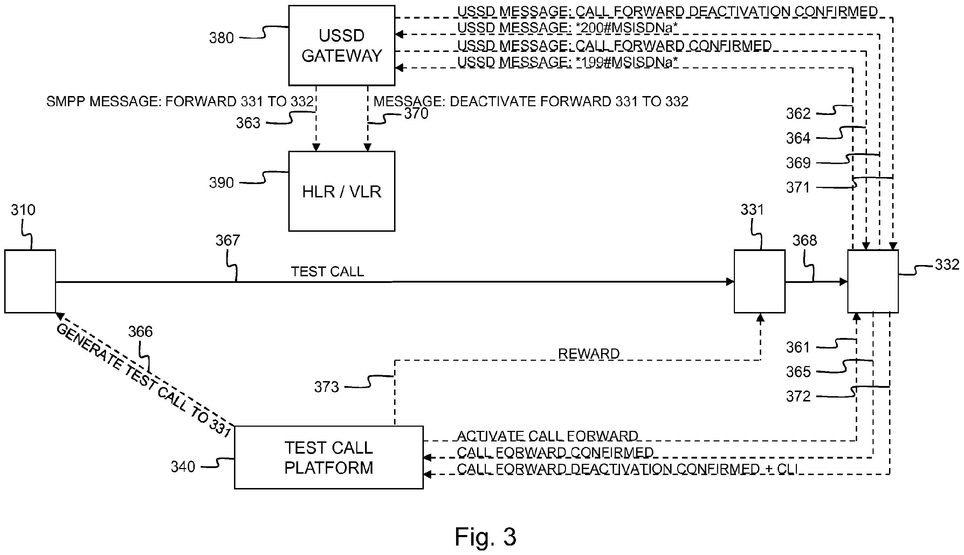

Fig. 3 illustrates a variant implementation of the method and system for bypass detection of the present invention involving a USSD gateway 380 to temporarily activate call forwarding for the real subscription 331 that is used for the test call. The test call platform 340 thereto sends instructions 361 to test probe 332 to activate call forwarding for real subscription 331. Upon receipt of these instructions 361, a first USSD message 362 is sent to USSD gateway 380. This first USSD message 362 contains a first specific USSD code, e.g. "*199#*", as well as an identification of the real subscription 331 that must be configured in call forward mode to the test probe 332. The entire USSD message 362 sent by the test probe 332 to the USSD gateway 380 hence looks as follows:
*199#MSISDNa*
Herein:
*199#* represents the specific USSD code that enables a third party, in this case the test probe 332, to request call forward to itself; and
MSISDNa represents the identification of the real subscription 331 whose number will temporarily be forwarded to the test probe 332 sending the USSD message.
The USSD message 362 may also contain an explicit mentioning of the subscription 332 sending the USSD message. In variant implementations where the USSD message 362 is sent from a different subscription that is controlled by the test call platform 340, the USSD message 362 shall contain an identification of the test probe subscription 332 whereto the real subscription 331 must be forwarded.

The USSD gateway 380 is a device present in the GSM network of the home network operator or visited network operator of subscription 331, able to receive and interpret USSD messages and able to connect with the Home Location Register or Visited Location Register HLR / VLR 390 of the home network operator or visited network operator of subscription 331. The USSD gateway 380 contains logic able to interpret the specific USSD code *199#*, and able to generate instructions 363 for the HLR / VLR 390 to configure call forward for the real subscriber 331 to the test probe 332 upon receipt of the specific USSD code *199#*. The USSD gateway thereto e.g. uses the SMPP protocol. Once this is done, the USSD gateway 380 sends a confirmation message 364 to the test probe 332, i.e. another USSD message confirming that the call forwarding from real subscription 331 to test probe 332 is configured. Thereupon, the test probe 332 informs the controller 340 that schedules and monitors the test calls that the requested call forward is implemented via confirmation message 365.

The test call platform 340 thereafter sends instructions 366 to test probe 310 to generate a test call 367 to real subscription 331. As a result of the call forward mode, the test call 367 will be forwarded to the test probe 332 as is indicated by 368 in Fig. 3.

As soon as the test call has taken place, the test probe 332 sends a second USSD message 369 to instruct the USSD gateway 380 to deactivate the call forward for the real subscription 331 whose number was used in the test call 367. This second USSD message 369 sent by test probe 332 contains a second specific USSD code, e.g. "*200#*", as well as an identification of the real subscription 331 whose call forward to the test probe 332 must be deactivated. The entire second USSD message 369 sent by the test probe 332 to the USSD gateway 380 may look as follows:
*200#MSISDNa*
Herein, *200#* represents the second specific USSD code that enables a third party, in this case the test probe 332, to request deactivation of call forward to itself. The USSD gateway 380 is able to interpret this second USSD message 369 and to activate logic that commands the HLR / VLR 390 via another message 370, to deactivate the call forwarding for the real subscription 331.

USSD gateway 380 thereupon sends a confirmation message 371 to test probe 332, e.g. another USSD message, to inform the test probe 332 that the call forwarding has been deactivated. Upon receipt of this confirmation 371, the test probe sends a confirmation 372 to the test call platform 340 informing the test call platform that the call forwarding for real subscription 331 has been deactivated. This confirmation message may contain the CLI received by test probe 332 in the test call 368 or a separate communication between test probe 332 and test call platform 340 may convey this CLI. Test call platform 340 shall analyse the CLI to detect bypass activity during the test call. Test call platform 340 can also inform the real subscription 331, e.g. via an SMS message 373, that its number is again reachable. The SMS message 373 may eventually contain information on a reward or compensation for the subscriber of real subscription 331.

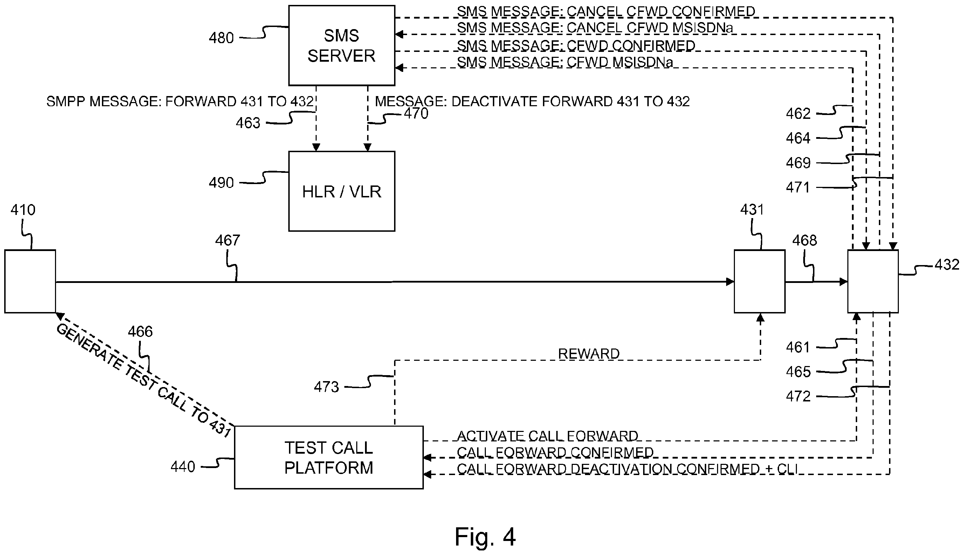

Fig. 4 illustrates a variant implementation of the method and system for bypass detection of the present invention involving a Short Message Service server or SMS server 480 to temporarily activate call forwarding for the real subscription 431 that is used for the test call. The test call platform 440 thereto sends instructions 461 to test probe 432 to activate call forwarding for real subscription 431. Upon receipt of these instructions 461, a first SMS message 462 is sent to SMS server 480. This first SMS message 462 contains a first specific code, e.g. "CFWD<SPACE>", as well as an identification of the real subscription 431 that must be configured in call forward mode to the test probe 432. The entire SMS message 462 sent by the test probe 432 to the SMS server 480 hence looks as follows:

### CFWD MSISDNa

Herein:
CFWD represents the specific code that enables a third party, in this case the test probe 432, to request call forward to itself; and
MSISDNa represents the identification of the real subscription 431 whose number will temporarily be forwarded to the test probe 432 sending the SMS message 462.
It is noticed that the SMS message 462 may also contain an explicit mentioning of the subscription 432 sending the SMS message, although the SMS server 480 is able to determine the subscription number used by test probe 432 to send the SMS 462. In variant implementations where the SMS message 462 is sent from a different subscription that is controlled by the test call platform 440, the SMS message 462 shall contain an identification of the test probe subscription 432 whereto the real subscription 431 must be forwarded.

The SMS server 480 is a device present in the GSM network of the home network operator or visited network operator of subscription 431, able to receive and interpret SMS messages and able to connect with the Home Location Register or Visited Location Register HLR / VLR 490 of the home network operator or visited network operator of subscription 431. The SMS server 480 contains logic able to interpret the specific code "CFWD", and able to generate instructions 463 for the HLR / VLR 490 to configure call forward for the real subscriber 431 to the test probe 432 upon receipt of the specific code "CFWD". The SMS server 480 thereto e.g. uses the SMPP protocol. Once this is done, the SMS server 480 sends a confirmation message 464 to the test probe 432, i.e. another SMS message confirming that the call forwarding from real subscription 431 to test probe 432 is configured, for instance an SMS with content "CFWD CONFIRMED". Thereupon, the test probe 432 informs the controller 440 that schedules and monitors the test calls that the requested call forward is implemented via confirmation message 465.

The test call platform 440 thereafter sends instructions 466 to test probe 410 to generate a test call 467 to real subscription 431. As a result of the call forward mode, the test call 467 will be forwarded to the test probe 432 as is indicated by 468 in Fig. 3.

As soon as the test call has taken place, the test probe 432 sends a second SMS message 469 to instruct the SMS server 480 to deactivate the call forward for the real subscription 431 whose number was used in the test call 467. This second SMS message 469 sent by test probe 432 contains a second specific code, e.g. "CANCEL CFWD<SPACE>", as well as an identification of the real subscription 431 whose call forward to the test probe 432 must be deactivated. The entire second SMS message 469 sent by the test probe 432 to the SMS server 480 may look as follows:
CANCEL CFWD MSISDNa
Herein, CANCEL CFWD represents the second specific code that enables a third party, in this case the test probe 432, to request deactivation of call forward to itself. The SMS server 480 is able to interpret this second SMS message 469 and to activate logic that commands the HLR / VLR 490 via another message 470, to deactivate the call forwarding for the real subscription 431.

SMS server 480 thereupon sends a confirmation message 471 to test probe 432, e.g. another SMS message with content "CANCEL CFWD CONFIRMED", to inform the test probe 432 that the call forwarding has been deactivated. Upon receipt of this confirmation 471, the test probe sends a confirmation 472 to the test call platform 440 informing the test call platform that the call forwarding for real subscription 431 has been deactivated. This confirmation message may contain the CLI received by test probe 432 in the test call 468 or a separate communication between test probe 432 and test call platform 440 may convey this CLI. Test call platform 440 shall analyse the CLI to detect bypass activity during the test call. Test call platform 440 can also inform the real subscription 431, e.g. via another SMS message 473, that its number is again reachable. The SMS message 473 may eventually contain information on a reward or compensation for the subscriber of real subscription 431.

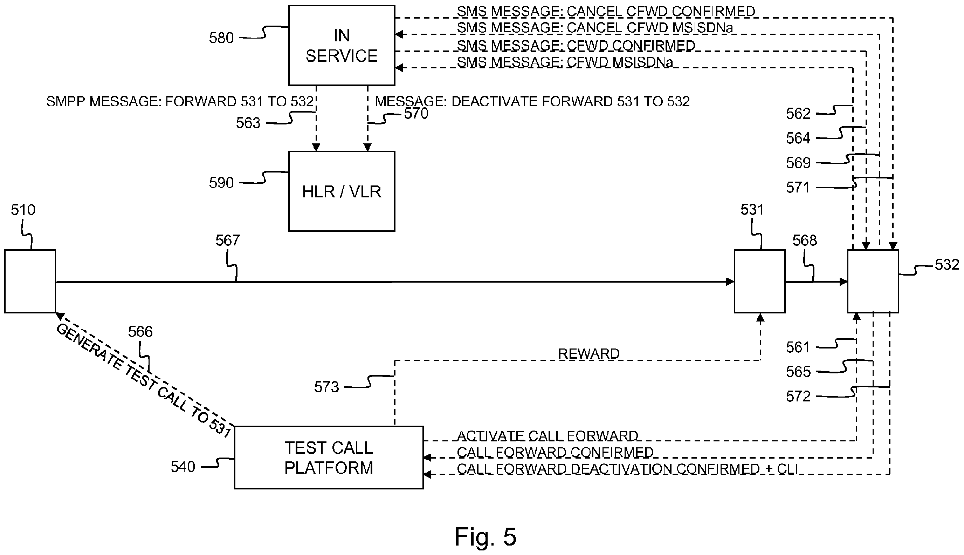

Fig. 5 illustrates a variant implementation of the method and system for bypass detection of the present invention involving an Intelligent Network Service or IN Service 580 to temporarily activate call forwarding for the real subscription 531 that is used for the test call and that is supposed to be a prepaid subscription. The test call platform 540 sends instructions 561 to test probe 532 to activate call forwarding for prepaid real subscription 531. Upon receipt of these instructions 561, a first SMS message 562 is sent to IN service 580. This first SMS message 562 contains a first specific code, e.g. "CFWD<SPACE>", as well as an identification of the prepaid real subscription 531 that must be configured in call forward mode to the test probe 532. It is noticed that as an alternative to SMS, the communication between test probe 532 and IN service 580 could rely on USSD messages or operate via an API. The entire SMS message 562 sent by the test probe 532 to the IN service 580 hence looks as follows:
CFWD MSISDNa
Herein:
CFWD represents the specific code that enables a third party, in this case the test probe 532, to request call forward to itself; and
MSISDNa represents the identification of the prepaid real subscription 531 whose number will temporarily be forwarded to the test probe 532 sending the SMS message 562.
It is noticed that the SMS message 562 may also contain an explicit mentioning of the subscription 532 sending the SMS message, although the IN service 580 is able to determine the subscription number used by test probe 532 to send the SMS 562. In variant implementations where the SMS message 562 is sent from a different subscription that is controlled by the test call platform 540, the SMS message 562 shall contain an identification of the test probe subscription 532 whereto the prepaid real subscription 531 must be forwarded.

The IN server 580 is a device present in the GSM network of the home network operator or visited network operator of subscription 531, able to manage services for prepaid subscriptions like 531 and able to connect with the Home Location Register or Visited Location Register HLR / VLR 590 of the home network operator or visited network operator of subscription 531. The IN service 580 contains logic able to interpret the specific code "CFWD", and able to generate instructions 563 for the HLR / VLR 590 to configure call forward for the prepaid real subscriber 531 to the test probe 532 upon receipt of the specific code "CFWD". The IN service 580 thereto e.g. uses the SMPP protocol. Once this is done, the IN service 580 sends a confirmation message 564 to the test probe 532, e.g. another SMS or USSD message confirming that the call forwarding from real subscription 531 to test probe 532 is configured, for instance an SMS with content "CFWD CONFIRMED". Thereupon, the test probe 532 informs the controller 540 that schedules and monitors the test calls that the requested call forward is implemented via confirmation message 565.

The test call platform 540 thereafter sends instructions 566 to test probe 510 to generate a test call 567 to prepaid real subscription 531. As a result of the call forward mode, the test call 567 will be forwarded to the test probe 532 as is indicated by 568 in Fig. 3.

As soon as the test call has taken place, the test probe 532 sends a second SMS message 569 to instruct the IN service 580 to deactivate the call forward for the prepaid real subscription 531 whose number was used in the test call 567. This second SMS message 569 sent by test probe 532 contains a second specific code, e.g. "CANCEL CFWD<SPACE>", as well as an identification of the prepaid real subscription 531 whose call forward to the test probe 532 must be deactivated. The entire second SMS message 569 sent by the test probe 532 to the IN service 580 may look as follows:
CANCEL CFWD MSISDNa
Herein, CANCEL CFWD represents the second specific code that enables a third party, in this case the test probe 532, to request deactivation of call forward to itself. The IN service 580 is able to interpret this second SMS message 569 and to activate logic that commands the HLR / VLR 590 via another message 570, to deactivate the call forwarding for the prepaid real subscription 531. As already mentioned here above, the communication between test probe 532 and IN service 580 may rely on USSD messaging instead of SMS.

IN service 580 thereupon sends a confirmation message 571 to test probe 532, e.g. another SMS message with content "CANCEL CFWD CONFIRMED", to inform the test probe 532 that the call forwarding has been deactivated. Upon receipt of this confirmation 571, the test probe 532 sends a confirmation 572 to the test call platform 540 informing the test call platform 540 that the call forwarding for prepaid real subscription 531 has been deactivated. This confirmation message 572 may contain the CLI received by test probe 532 in the test call 568 or a separate communication between test probe 532 and test call platform 540 may convey this CLI. Test call platform 540 shall analyse the CLI to detect bypass activity during the test call. Test call platform 540 can also inform the prepaid real subscription 531, e.g. via another SMS message 573, that its number is again reachable. The SMS message 573 may eventually contain information on a reward or compensation for the subscriber of prepaid real subscription 531.

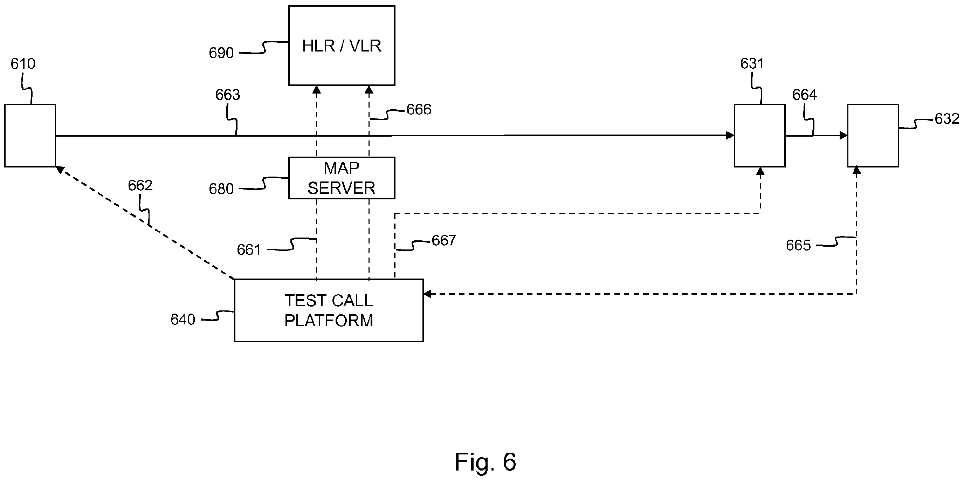

Fig. 6 illustrates an implementation of the system according to the invention wherein the test call platform 640 makes use of a MAP server 680 to temporarily set call forwarding, for instance unconditional call forwarding, for real subscription 631 in the Home Location Register or HLR 690 of the operator of the real subscription 631. Via the MAP server 680, the test call platform 640 sends instructions 661 to HLR 690 to activate unconditional call forward for real subscription 631 to the test probe 632. Thereafter, the test call platform 640 sends instructions 662 to probe 610 to initiate a test call 663 to real subscription 631. As a result of the call forward mode, the test call 663 will be forwarded to test probe 632. This is indicated by 664 in Fig. 6. The call forward preferably will be an unconditional call forward to reduce the time needed to perform the test call. After the test call 663, 664, the test probe 632 will report the received CLI to the test call platform 640, as indicated by 665, and the test call platform 640 will analyse the CLI to detect bypass activity. The test call platform 640 via the MAP server 680 sends instructions 666 to HLR 690 to deactivate the call forwarding as soon as the test call is performed, and sends a message 667 to the real subscription 631 to inform the subscription that its number is again reachable, and eventually reward the subscriber of that real subscription 631 with some credit.

The skilled person will appreciate, that as an alternative to the MAP server, embodiments of the present invention may be contemplated that rely on other signalling servers that are able to connect with the HLR and instruct the HLR to configure call forward on a given subscriber number.

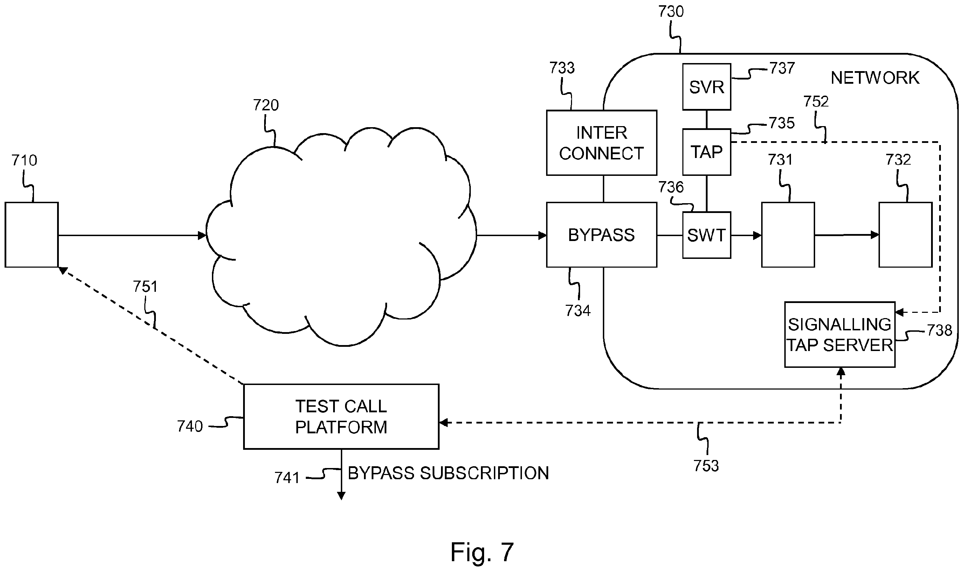

Fig. 7 shows an example of a system 740 for detection of a bypass 734 of an interconnect 733 to a telecommunication network 730 that operates according to the present invention and relies on signalling tapping. The system 740 is a test call platform or TCG system that schedules tests calls and instructs test probes to originate such test calls at specific time instances. In Fig. 7, test call platform 740 sends instructions 751 to test probe 710 to generate a test call at a specified time to a number of a real subscriber 731, the so called real subscription number of a real subscriber that is active in network 730 at the point in time the test call is made. The off-net test call originating from test probe 710, e.g. an end-user facility 710 in a network different from the telecommunication network 730, e.g. a smartphone equipped with a SIM card making a call to a number of a real subscriber 731 in telecommunication network 730, i.e. its home network or a visited network, is supposed to pass through the interconnect facility 733 between the network where test probe 710 is located and network 730 or between any intermediate operator's network 720 and network 730. The bypass 734 however may intercept the call from test probe 710 to the number of the real subscriber 731, setup an on-net call from the bypass 734 to the real subscription 731 in the network 730.

In the network 730, a signalling tap 735 is installed. The signalling tap 735 is a passive tap (or a set of taps) that eavesdrops or sniffs on all signalling between network elements such as switches 736 and signalling servers 737, e.g. IN servers or STP servers. The tapped signalling or relevant portions thereof are stored by the signalling tap 735 in a signalling tap server 738, as is indicated by 752 in Fig. 7. These relevant portions represent call data that can be consulted by the test call platform 740, as indicated by 753 in Fig. 7. The call data stored in signalling tap server 738 shall at least contain the CLI, A party, B party and timestamps, but will in general contain much more information, often similar to CDR data. Hence, the CLI present in the test call from 710 to 731 can be consulted by the test call platform 740 and this CLI is analysed using known techniques to determine bypass from CLI analysis. If it belongs for instance to the numbering plan of network 730, test call platform 740 shall identify the subscription corresponding to that CLI as a bypass subscription 741 of bypass 734. The test call platform 740 reports such bypass subscription 741 to the operator of network 730 in order to enable the operator to deactivate such subscription.

Alternatively, the test call platform 740 may configure the real subscription 731 temporarily in call forward mode to test probe 732. As a result, all calls to real subscription 731 will be forwarded to a test probe 732 in network 730 that is controlled by the test call platform 740. When the time interval is kept short and no interfering calls arrive at the real subscription 731, only the test call from test probe 710 to real subscription 731 is forwarded to test probe 732. Test probe 732 thereupon can be consulted by test call platform 740 such that test call platform 740 obtains the CLI received by test probe 732. Again, the test call platform 740 can analyse the CLI, e.g. compare it with the numbering plan of the network 730 or country wherein the network 730 is located, to detect that the received CLI belongs to a bypass 734. If this is the case, the bypass subscription 741 is reported to the operator of network 730 to enable the operator to take this bypass subscription 741 out of operation.

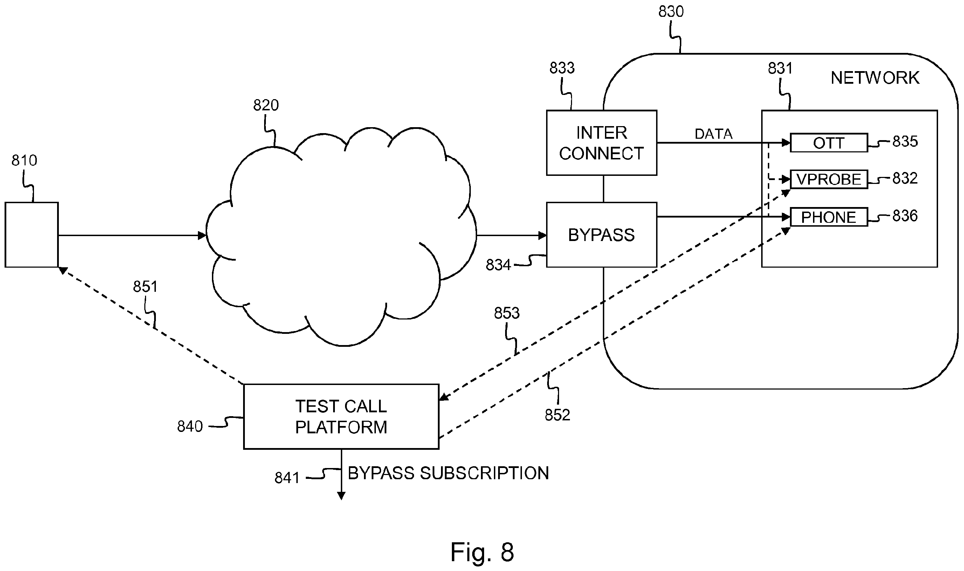

Fig. 8 shows yet another embodiment of a system 840 for detection of a bypass 834 of an interconnect 833 to a telecommunication network 830 that operates according to the present invention. The system 840 is a test call platform or TCG system that schedules tests calls and instructs test probes to originate such test calls at specific time instances. In Fig. 8, test call platform 840 sends instructions 851 to test probe 810 to generate a test call at a specified time to a number of a real subscriber 831, the so called real subscription number of a real subscriber that is active in network 830 at the point in time the test call is made. It is further assumed in Fig. 8 that a virtual test probe 832 has been installed on the real subscriber's appliance. This virtual test probe 832 is a software application that intercepts calls from either the regular mobile network or data network before the calls arrive at the call terminating application, i.e. either the regular phone application 836 or an Over-The-Top application 835, that does not disturb the subscriber upon interception of an incoming call, and that extracts certain information from the incoming call for consultation by the test platform 840. The off-net test call originating from test probe 810, e.g. an end-user facility 810 in a network different from the telecommunication network 830, e.g. a smartphone equipped with a SIM card making a call to the number of real subscriber 831 in telecommunication network 830, i.e. its home network or a visited network, is supposed to pass through the interconnect facility 833 between the network wherein test probe 810 is located and network 830 or between any intermediate operator's network 820 and network 830. The bypass 834 however may intercept the call from test probe 810 to the number of the real subscriber 831, and setup an on-net call from the bypass 834 to the real subscription 831 in the network 830.

The test call platform 840 or the virtual test probe 832 configures the regular call terminating facility 835, 836 to operate temporarily in intercept mode, as is indicated by arrow 852 in Fig. 8. As a result, all calls terminated at the call terminating facility 835, 836 will be intercepted by the virtual test probe 832 installed on the real subscribers' appliance. Virtual test probe 832 can be consulted by test call platform 840 such that test call platform 840 obtains the CLI received by test probe 832. This is indicated by arrow 853 in Fig. 8. Again, the test call platform 840 can analyse the CLI, e.g. compare it with the numbering plan of the network 830 or country wherein the network 830 is located, to detect that the received CLI belongs to a bypass 834. If this is the case, the bypass subscription 841 is reported to the operator of network 830 to enable the operator to take this bypass subscription 841 out of operation.

Although the embodiment with virtual test probe 832 illustrated by Fig. 8 is not restricted thereto, this embodiment is particularly advantageous when an Over-The-Top application, abbreviated OTT application, has been installed on the real subscriber's appliance. An OTT application 835 such as Viber may for instance be installed and register in the Session Initiation Protocol registry server or SIP registry server of the OTT application provider that calls destined to the real subscriber number 831 can be terminated at this OTT application 835, e.g. at its Viber subscription. Consequently, also the test call from test probe 810 may be terminated at the OTT application 835 as a result of which it will disturb the subscriber. Thanks to installation of the virtual probe 832 and the temporary call forwarding from the OTT application 835 to the virtual probe 832, it is made possible to avoid that incoming test call disturbs the subscriber as the virtual probe 832 will not make the subscriber's appliance ring, buzz or vibrate to notify an incoming call. The virtual probe 832 will only extract useful information from an incoming call, like the CLI, enabling the test call platform 840 to detect bypass activity.

Fig.8 shows a suitable computing system 900 for hosting the system for bypass detection according to the invention, embodiments of which are drawn in Fig. 1 - Fig 8. Computing system 900 may in general be formed as a suitable general purpose computer and comprise a bus 910, a processor 902, a local memory 904, one or more optional input interfaces 914, one or more optional output interfaces 916, a communication interface 912, a storage element interface 906 and one or more storage elements 908. Bus 910 may comprise one or more conductors that permit communication among the components of the computing system. Processor 902 may include any type of conventional processor or microprocessor that interprets and executes programming instructions. Local memory 904 may include a random access memory (RAM) or another type of dynamic storage device that stores information and instructions for execution by processor 902 and/or a read only memory (ROM) or another type of static storage device that stores static information and instructions for use by processor 904. Input interface 914 may comprise one or more conventional mechanisms that permit an operator to input information to the computing device 900, such as a keyboard 920, a mouse 930, a pen, voice recognition and/or biometric mechanisms, etc. Output interface 916 may comprise one or more conventional mechanisms that output information to the operator, such as a display 940, a printer 950, a speaker, etc. Communication interface 912 may comprise any transceiver-like mechanism such as for example two 1Gb Ethernet interfaces that enables computing system 900 to communicate with other devices and/or systems, for example mechanisms for communicating with one or more other computing systems. The communication interface 912 of computing system 900 may be connected to such another computing system 960 by means of a local area network (LAN) or a wide area network (WAN, such as for example the internet, in which case the other computing system may for example comprise a suitable web server. Storage element interface 906 may comprise a storage interface such as for example a Serial Advanced Technology Attachment (SATA) interface or a Small Computer System Interface (SCSI) for connecting bus 810 to one or more storage elements 908, such as one or more local disks, for example 1TB SATA disk drives, and control the reading and writing of data to and/or from these storage elements 808. Although the storage elements 908 above is described as a local disk, in general any other suitable computer-readable media such as a removable magnetic disk, optical storage media such as a CD or DVD, -ROM disk, solid state drives, flash memory cards, ... could be used.

The steps executed in the method for bypass detection according to the present invention, illustrated by the above embodiments, may be implemented as programming instructions stored in local memory 904 of the computing system 900 for execution by its processor 902. Alternatively the instructions may be stored on the storage element 908 or be accessible from another computing system through the communication interface 912.

It is remarked that although reference was made to SS7 in various embodiment descriptions here above, the present invention is not restricted to the use or analysis of particular signalling like SS7 signalling. More recent protocols like the Session Initiation Protocol, abbreviated SIP, and/or the DIAMETER protocol, or even alternative, future protocols may be used to implement variant, possibly more efficient embodiments of the present invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope of the invention as it is depicted in the appended claims. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for detection of a bypass (134; 734; 834) of an interconnect (133; 733; 833) to a telecommunication network (130; 730; 830), comprising:
- generating a test call (263; 367; 467; 567; 663) to or through a real subscriber number of a real subscriber (131; 231; 331; 431; 531; 631; 731; 831) active in said telecommunication network;
- obtaining call data (153; 265; 372; 472; 572; 665; 753; 853) from a test probe (132; 232; 332; 432; 532; 632; 732; 832) whereto said real subscriber number of said real subscriber (131; 231; 331; 431; 531; 631; 731; 831) is temporarily forwarded during a time interval wherein said test call (263; 367; 467; 567; 663) is made, said call data (153; 265; 372; 472; 572; 665; 753; 853) being reported by said test probe (132; 232; 332; 432; 532; 632; 732; 832) and including a received calling line identifier corresponding to the calling line identifier that would have been received by said real subscriber (131; 231; 331; 431; 531; 631; 731; 831) if its number was not configured in call forward mode;
- extracting a received calling line identifier for said test call (263; 367; 467; 567; 663) from said call data (154, 153; 265; 372; 472; 572; 665; 753; 853) comprising extracting said received calling line identifier from said call data (153; 265; 372; 472; 572; 665; 753; 853) reported by said test probe (132; 232; 332; 432; 532; 632; 732; 832); and
- detecting presence of a bypass (134; 734; 834) by analysis of said received calling line identifier, by verifying if said received calling line identifier belongs to the numbering plan of said telecommunication network (130; 730; 830) wherein said test call (263; 367; 467; 567; 663) is received, or by verifying the country code, or by establishing that said received calling line identifier does not correspond to the calling line identifier of an origin of said test call (263; 367; 467; 567; 663).

2. A method for detection of a bypass (134; 734; 834) of an interconnect (133; 733; 833) to a telecommunication network (130; 730; 830) according to claim 1,
wherein said call data (153; 265; 372; 472; 572; 665; 853 are obtained from said
test probe (132; 232; 332; 432; 532; 632; 835) in said telecommunication network whereto said real subscriber number of said real subscriber (131; 231; 331; 431; 531; 631; 831) is temporarily forwarded during a time interval wherein said test call (263; 367; 467; 567; 663) is made without intercepting the signalling of calls to said real subscriber number at a gateway.

3. A method for detection of a bypass (134; 734) of an interconnect (133; 733) to a telecommunication network (130; 730) according to claim 2,
wherein temporarily forwarding said real subscriber number of said real subscriber (231) to said test probe (232) comprises:
- transmitting a command (261) to a Home Location Register or Visited Location Register (290) of said telecommunication network via an application programming interface (280) of said telecommunication network wherein said command (261) enables to configure call forwarding of said real subscriber number (231) to said test probe (232).

4. A method for detection of a bypass (134; 734) of an interconnect (133; 733) to a telecommunication network (130; 730) according to claim 2,
wherein temporarily forwarding said real subscriber number of said real subscriber (331) to said test probe (332) comprises:
- transmitting a specific USSD code (362) from said test probe (332) or any subscription managed by the test call system to a USSD gateway (380) in said telecommunication network, accompanied by an identification of said real subscriber number, said specific USSD code (362) triggering specific logic to configure call forwarding; and
- transmitting a command (363) from said USSD gateway (380) to a Home Location Register or Visited Location Register (390) of said telecommunication network, wherein said command enables to configure call forwarding for said real subscriber number (331) to said test probe (332), and
wherein said method further comprises transmitting instructions (365) from said test probe (332) to make said test call (367).

5. A method for detection of a bypass (134; 734) of an interconnect (133; 733) to a telecommunication network (130; 730) according to claim 4,
wherein said method further comprises:
- transmitting a specific call forward deactivation USSD code (369) from said test probe (332) to said USSD gateway (380) after said test call (367); and
- transmitting a command (370) from said USSD gateway (380) to said Home Location Register or Visited Location Register (390) of said telecommunication network, wherein said command enables to deactivate said call forwarding of said real subscriber number (331) to said test probe (332).

6. A method for detection of a bypass (134; 734) of an interconnect (133; 733) to a telecommunication network (130; 730) according to claim 2,
wherein temporarily forwarding said real subscriber number of said real subscriber (431) to said test probe (432) comprises:
- transmitting an SMS message (462) with specific code from said test probe (432) or any subscription managed by the test call system to an SMS server (480) in said telecommunication network, accompanied by an identification of said real subscriber number; and
- transmitting a command (463) from said SMS server (480) to a Home Location Register or Visited Location Register (490) of said telecommunication network, wherein said command (463) enables to configure call forwarding for said real subscriber number (431) to said test probe (432), and
wherein said method further comprises transmitting instructions (465) from said test probe (432) to make said test call (467).

7. A method for detection of a bypass (134; 734) of an interconnect (133; 733) to a telecommunication network (130; 730) according to claim 2,
wherein temporarily forwarding said real subscriber number of said real subscriber (531) to said test probe (532) comprises:
- transmitting a command (562) with specific code from said test probe (531) or any subscription managed by the test call system to an Intelligent Network service (580) in said telecommunication network, accompanied by an identification of said real subscriber number, wherein said real subscriber number is a prepaid number; and
- transmitting a command (563) from said Intelligent Network service (580) to a Home Location Register or Visited Location Register (590) of said telecommunication network, wherein said command (563) enables to configure call forwarding for said real subscriber number (531) to said test probe (532), and
wherein said method further comprises transmitting instructions (565) from said test probe (532) to make said test call.

8. A method for detection of a bypass (134; 734) of an interconnect (133; 733) to a telecommunication network (130; 730) according to claim 2,
wherein temporarily forwarding said real subscriber number of said real subscriber (631) to said test probe (632) comprises:
- transmitting a command (661) to a Home Location Register or Visited Location Register (690) of said telecommunication network via a signalling server (680) of said telecommunication network wherein said command (661) enables to configure call forwarding of said real subscriber number (631) to said test probe (632).

9. A method for detection of a bypass (134; 734) of an interconnect (133; 733) to a telecommunication network (130; 730) according to any one of claims 4, 6, 7 or 8, further comprising:
- transmitting a specific code as part of an USSD command, SMS message, IN message or signalling message to respectively an USSD gateway (380), SMS server (480), IN service (580) or signalling server (680) to obtain the call forward state of said real subscriber number in order to be able to restore said call forward state or to abandon the test.

10. A method for detection of a bypass (134; 734; 834) of an interconnect (133; 733; 833) to a telecommunication network (130; 730; 830) according to any one of claims 2 to 9, wherein temporarily forwarding said real subscriber (131; 231; 331; 431; 531; 631; 731; 831) to said test probe (132; 232; 332; 432; 532; 632; 732; 832) comprises either one of:
- forwarding said real subscriber number (131; 231; 331; 431; 531; 631; 731; 831) to said test probe (132; 232; 332; 432; 532; 632; 732; 832) for a limited, predetermined time interval;
- forwarding said real subscriber number (131; 231; 331; 431; 531; 631; 731; 831) to said test probe (132; 232; 332; 432; 532; 632; 732; 832) until said test call (263; 367; 467; 567; 663) is completed; or
- forwarding said real subscriber number (131; 231; 331; 431; 531; 631; 731; 831) to said test probe (132; 232; 332; 432; 532; 632; 732; 832) until said test call (263; 367; 467; 567; 663) is completed or a predetermined timer expires, whichever occurs first.

11. A method for detection of a bypass (134; 734; 834) of an interconnect (133; 733; 833) to a telecommunication network (130; 730; 830) according to any one of the preceding claims, further comprising:
- selecting said real subscriber number of said real subscriber (131; 231; 331; 431; 531; 631; 731; 831) from an intelligent list of real subscribers received from said operator of said telecommunication network (130; 730: 830).

12. A method for detection of a bypass (134; 734; 834) of an interconnect (133; 733; 833) to a telecommunication network (130; 730; 830) according to claim 11, wherein said intelligent list comprises one or more of:
- subscriber numbers of real subscribers of said telecommunication network (130; 730; 830) that in recent past received an amount of international calls exceeding a certain threshold;
- recycled subscriber numbers of real subscribers of said telecommunication network (130; 730; 830) that recently unsubscribed from said telecommunication network (130; 730; 830);
- subscriber numbers that form part of a new range of yet unused real subscriber numbers from said telecommunication network (130; 730; 830);
- subscriber numbers of real subscribers of said telecommunication network (130; 730; 830) that were never before configured in call forward mode.

13. A method for detection of a bypass (134; 734; 834) of an interconnect (133; 733; 833) to a telecommunication network (130; 730; 830) according to claim 11 or claim 12, wherein certain high profile real subscribers of said telecommunication network (130; 730; 830) have been removed from said intelligent list.

14. A method for detection of a bypass (134; 734; 834) of an interconnect (133; 733; 833) to a telecommunication network (130; 730; 830) according to any one of the preceding claims, further comprising:
- sending a message to said real subscriber number to inform said real subscriber that his number will temporarily be out of service for a test.

15. A method for detection of a bypass (834) of an interconnect (833) to a telecommunication network (830) according to claim 1, wherein said test probe is a virtual test probe (832) installed on an appliance of said real subscriber.

16. A system for detection of a bypass (134; 734; 834) of an interconnect (133; 733; 833) to a telecommunication network (130; 730; 830), said system comprising:
- means (110; 210; 310; 410; 510; 610; 710; 810) adapted to originate a test call (263; 367; 467; 567; 663) to or through a real subscriber number of a real subscriber (131; 231; 331; 431; 531; 631; 731; 831) of said telecommunication network (130; 730; 830); and
- a control system (140; 240; 340; 440; 540; 640; 740; 840) configured to:
• control initiation of said test call (263; 367; 467; 567; 663) to or through said real subscriber number;
• receive call data (153; 265; 372; 472; 572; 665; 753; 853) from a test probe (132; 232; 332; 432; 532; 632; 732; 832) whereto said real subscriber number of said real subscriber (131; 231; 331; 431; 531; 631; 731; 831) is temporarily forwarded during a time interval wherein said test call (263; 367; 467; 567; 663) is made, said call data (153; 265; 372; 472; 572; 665; 753; 853) being reported by said test probe (132; 232; 332; 432; 532; 632; 732; 832) and including a received calling line identifier corresponding to the calling line identifier that would have been received by said real subscriber (131; 231; 331; 431; 531; 631; 731; 831) if its number was not configured in call forward mode;
• extract a received calling line identifier for said test call (263; 367; 467; 567; 663) from said call data (154, 153; 265; 372; 472; 572; 665; 753; 853) comprising extracting said received calling line identifier from said call data (153; 265; 372; 472; 572; 665; 753; 853) reported by said test probe (132; 232; 332; 432; 532; 632; 732; 832); and
• detect presence of a bypass (134; 734; 834) by analysis of said received calling line identifier, by verifying if said received calling line identifier belongs to the numbering plan of said telecommunication network (130; 730; 830) wherein said test call (263; 367; 467; 567; 663) is received, or by verifying the country code, or by establishing that said received calling line identifier does not correspond to the calling line identifier of an origin of said test call (263; 367; 467; 567; 663).

## Patentansprüche

1. Verfahren zur Erkennung einer Umgehung (134; 734; 834) einer Verbindung (133; 733; 833) mit einem Telekommunikationsnetzwerk (130; 730; 830), umfassend:
- Generieren eines Testanrufs (263; 367; 467; 567; 663) bei einer oder durch eine echte Teilnehmernummer eines echten Teilnehmers (131; 231; 331; 431; 531; 631; 731; 831), die in dem Telekommunikationsnetzwerk aktiv ist;
- Erhalten von Anrufdaten (153; 265; 372; 472; 572; 665; 753; 853) von einer Testsonde (132; 232; 332; 432; 532; 632; 732; 832), an die die echte Teilnehmernummer des echten Teilnehmers (131; 231; 331; 431; 531; 631; 731; 831) während eines Zeitintervalls, in dem der Testanruf (263; 367; 467; 567; 663) gemacht wird, temporär weitergeleitet wird, wobei die Anrufdaten (153; 265; 372; 472; 572; 665; 753; 853) von der Testsonde (132; 232; 332; 432; 532; 632; 732; 832) berichtet werden und eine empfangene Kennung der anrufenden Leitung enthalten, die der Kennung der anrufenden Leitung entspricht, die vom echten Teilnehmer (131; 231; 331; 431; 531; 631; 731; 831) empfangen worden wäre, wenn seine Nummer nicht im Anrufweiterleitungsmodus konfiguriert wäre;
- Extrahieren einer empfangenen Kennung der anrufenden Leitung für den Testanruf (263; 367; 467; 567; 663) aus den Anrufdaten (154, 153; 265; 372; 472; 572; 665; 753; 853), umfassend Extrahieren der empfangenen Kennung der anrufenden Leitung aus den Anrufdaten (153; 265; 372; 472; 572; 665; 753; 853), die von der Testsonde (132; 232; 332; 432; 532; 632; 732; 832) berichtet wurde; und
- Erkennen eines Vorhandenseins einer Umgehung (134; 734; 834) durch Analyse der empfangenen Kennung der anrufenden Leitung durch Verifizieren, ob die empfangene Kennung der anrufenden Leitung zum Nummerierungsplan des Telekommunikationsnetzwerks (130; 730; 830) gehört, in dem der Testanruf (263; 367; 467; 567; 663) empfangen wurde, oder durch Verifizieren der Ländervorwahl oder durch Ermitteln, dass die empfangene Kennung der anrufenden Leitung der Kennung der anrufenden Leitung einer Herkunft des Testanrufs (263; 367; 467; 567; 663) nicht entspricht.

2. Verfahren zur Erkennung einer Umgehung (134; 734; 834) einer Verbindung (133; 733; 833) mit einem Telekommunikationsnetzwerk (130; 730; 830) nach Anspruch 1,
wobei die Anrufdaten (153; 265; 372; 472; 572; 665; 853) von der Testsonde (132; 232; 332; 432; 532; 632; 835) im Telekommunikationsnetz erhalten werden, an die die echte Teilnehmernummer des echten Teilnehmers (131; 231; 331; 431; 531; 631; 831) während eines Zeitintervalls temporär weitergeleitet wird, in dem der Testanruf (263; 367; 467; 567; 663) gemacht wird, ohne die Signalgebung von Anrufen an den echten Teilnehmer an einem Gateway abzufangen.

3. Verfahren zur Erkennung einer Umgehung (134; 734) einer Verbindung (133; 733) mit einem Telekommunikationsnetzwerk (130; 730) nach Anspruch 2,
wobei das temporäre Weiterleiten der echten Teilnehmernummer (231) an die Testsonde (232) umfasst:
- Senden eines Befehls (261) an ein Heimstandortregister oder Besuchsstandortregister (290) des Telekommunikationsnetzwerks über eine Anwendungsprogrammierungsschnittstelle (280) des Telekommunikationsnetzwerks, wobei der Befehl (261) die Konfiguration der Anrufweiterleitung der echten Teilnehmernummer (231) an die Testsonde (232) ermöglicht.

4. Verfahren zur Erkennung einer Umgehung (134; 734) einer Verbindung (133; 733) mit einem Telekommunikationsnetzwerk (130; 730) nach Anspruch 2,
wobei das temporäre Weiterleiten der echten Teilnehmernummer des echten Teilnehmers (331) an die Testsonde (332) umfasst:
- Senden eines spezifischen USSD-Codes (362) von der Testsonde (332) oder jeder vom Testanrufsystem verwalteten Teilnahme an ein USSD-Gateway (380) im Telekommunikationsnetzwerk, begleitet von einer Kennung der echten Teilnehmernummer, wobei der spezifische USSD-Code (362) spezifische Logik auslöst, um die Anrufweiterleitung zu konfigurieren; und
- Senden eines Befehls (363) vom USSD-Gateway (380) an ein Heimstandortregister oder Besuchsstandortregister (390) des Telekommunikationsnetzwerks, wobei der Befehl die Konfiguration der Anrufweiterleitung der echten Teilnehmernummer (331) an die Testsonde (332) ermöglicht, und
wobei das Verfahren ferner das Senden von Anweisungen (365) von der Testsonde (332) umfasst, um den Testanruf (367) zu machen.

5. Verfahren zur Erkennung einer Umgehung (134; 734) einer Verbindung (133; 733) mit einem Telekommunikationsnetzwerk (130; 730) nach Anspruch 4,
wobei das Verfahren ferner umfasst:
- Senden eines spezifischen USSD-Codes zur Deaktivierung der Anrufweiterleitung (369) von der Testsonde (332) an das USSD-Gateway (380) nach dem Testanruf (367); und
- Senden eines Befehls (370) vom USSD-Gateway (380) an das Heimstandortregister oder Besuchsstandortregister (390) des Telekommunikationsnetzwerks, wobei der Befehl die Deaktivierung der Anrufweiterleitung der echten Teilnehmernummer (331) an die Testsonde (332) ermöglicht.

6. Verfahren zur Erkennung einer Umgehung (134; 734) einer Verbindung (133; 733) mit einem Telekommunikationsnetzwerk (130; 730) nach Anspruch 2,
wobei das temporäre Weiterleiten der echten Teilnehmernummer des echten Teilnehmers (431) an die Testsonde (432) umfasst:
- Senden einer SMS-Mitteilung (462) mit spezifischem Code von der Testsonde (432) oder jeder vom Testanrufsystem verwalteten Teilnahme an einen SMS-Server (480) im Telekommunikationsnetzwerk, begleitet von einer Kennung der echten Teilnehmernummer; und
- Senden eines Befehls (463) vom SMS-Server (480) an ein Heimstandortregister oder Besuchsstandortregister (490) des Telekommunikationsnetzwerks, wobei der Befehl (463) die Konfiguration der Anrufweiterleitung für die echte Teilnehmernummer (431) an die Testsonde (432) ermöglicht, und
wobei das Verfahren ferner das Senden von Anweisungen (465) von der Testsonde (432) umfasst, um den Testanruf (467) zu machen.

7. Verfahren zur Erkennung einer Umgehung (134; 734) einer Verbindung (133; 733) mit einem Telekommunikationsnetzwerk (130; 730) nach Anspruch 2,
wobei das temporäre Weiterleiten der echten Teilnehmernummer des echten Teilnehmers (531) an die Testsonde (532) umfasst:
- Senden eines Befehls (562) mit spezifischem Code von der Testsonde (531) oder jeder vom Testanrufsystem verwalteten Teilnahme an einen Intelligenten Netzwerkdienst (580) im Telekommunikationsnetzwerk, begleitet von einer Kennung der echten Teilnehmernummer, wobei die echte Teilnehmernummer eine Prepaid-Nummer ist; und
- Senden eines Befehls (563) vom Intelligenten Netzwerkdienst (580) an ein Heimstandortregister oder Besuchsstandortregister (590) des Telekommunikationsnetzwerks, wobei der Befehl (563) die Konfiguration der Anrufweiterleitung für die echte Teilnehmernummer (531) an die Testsonde (532) ermöglicht, und
wobei das Verfahren ferner das Senden von Anweisungen (565) von der Testsonde (532) umfasst, um den Testanruf zu machen.

8. Verfahren zur Erkennung einer Umgehung (134; 734) einer Verbindung (133; 733) mit einem Telekommunikationsnetzwerk (130; 730) nach Anspruch 2,
wobei das temporäre Weiterleiten der echten Teilnehmernummer des echten Teilnehmers (631) an die Testsonde (632) umfasst:
- Senden eines Befehls (661) an ein Heimstandortregister oder Besuchsstandortregister (690) des Telekommunikationsnetzwerks über einen Signalgebungsserver (680) des Telekommunikationsnetzwerks, wobei der Befehl (661) die Konfiguration der Anrufweiterleitung der echten Teilnehmernummer (631) an die Testsonde (632) ermöglicht.

9. Verfahren zur Erkennung einer Umgehung (134; 734) einer Verbindung (133; 733) mit einem Telekommunikationsnetzwerk (130; 730) nach einem der Ansprüche 4, 6, 7 oder 8, ferner umfassend:
- Senden eines spezifischen Codes als Teil eines USSD-Befehls, einer SMS-Mitteilung, einer IN-Mitteilung oder einer Signalgebungsmitteilung jeweils an ein USSD-Gateway (380), einen SMS-Server (480), einen IN-Dienst (580) oder einen Signalgebungsserver (680), um den Anrufweiterleitungszustand der echten Teilnehmernummer zu erhalten, um in der Lage zu sein, den Anrufweiterleitungszustand wiederherzustellen oder den Test abzubrechen.

10. Verfahren zur Erkennung einer Umgehung (134; 734; 834) einer Verbindung (133; 733; 833) mit einem Telekommunikationsnetzwerk (130; 730; 830) nach einem der Ansprüche 2 bis 9, wobei das temporäre Weiterleiten des echten Teilnehmers (131; 231; 331; 431; 531; 631; 731; 831) an die Testsonde (132; 232; 332; 432; 532; 632; 732; 832) eines der Folgenden umfasst:
- Weiterleiten der echten Teilnehmernummer (131; 231; 331; 431; 531; 631; 731; 831) an die Testsonde (132; 232; 332; 432; 532; 632; 732; 832) für ein begrenztes, vorbestimmtes Zeitintervall;
- Weiterleiten der echten Teilnehmernummer (131; 231; 331; 431; 531; 631; 731; 831) an die Testsonde (132; 232; 332; 432; 532; 632; 732; 832), bis der Testanruf (263; 367; 467; 567; 663) abgeschlossen ist; oder
- Weiterleiten der echten Teilnehmernummer (131; 231; 331; 431; 531; 631; 731; 831) an die Testsonde (132; 232; 332; 432; 532; 632; 732; 832), bis der Testanruf (263; 367; 467; 567; 663) abgeschlossen ist oder ein vorbestimmter Timer abläuft, je nach dem, was früher eintritt.

11. Verfahren zur Erkennung einer Umgehung (134; 734; 834) einer Verbindung (133; 733; 833) mit einem Telekommunikationsnetzwerk (130; 730; 830) nach einem der vorhergehenden Ansprüche, ferner umfassend:
- Auswählen der echten Teilnehmernummer des echten Teilnehmers (131; 231; 331; 431; 531; 631; 731; 831) aus einer intelligenten Liste echter Teilnehmer, die vom Betreiber des Telekommunikationsnetzwerks (130; 730; 830) empfangen wurde.

12. Verfahren zur Erkennung einer Umgehung (134; 734; 834) einer Verbindung (133; 733; 833) mit einem Telekommunikationsnetzwerk (130; 730; 830) nach Anspruch 11, wobei die intelligente Liste eines oder mehrere der Folgenden umfasst:
- Teilnehmernummern von echten Teilnehmern des Telekommunikationsnetzwerks (130; 730; 830), die in der Vergangenheit einen Menge an internationalen Anrufen empfangen haben, die einen bestimmten Schwellwert übersteigt;
- recycelte Teilnehmernummern echter Teilnehmer des Telekommunikationsnetzwerks (130; 730; 830), die sich kürzlich vom Telekommunikationsnetzwerk (130; 730; 830) abgemeldet haben;
- Teilnehmernummern, die Teil einer neuen Reihe noch ungenutzter echter Teilnehmernummern von dem Telekommunikationsnetzwerk (130; 730; 830) bilden;
- Teilnehmernummern echter Teilnehmer des Telekommunikationsnetzwerks (130; 730; 830), die zuvor noch nie im Anrufweiterleitungsmodus konfiguriert waren.

13. Verfahren zur Erkennung einer Umgehung (134; 734; 834) einer Verbindung (133; 733; 833) zu einem Telekommunikationsnetzwerk (130; 730; 830) nach Anspruch 11 oder Anspruch 12, wobei bestimmte prominente echte Teilnehmer des Telekommunikationsnetzwerks (130; 730; 830) von der intelligenten Liste entfernt wurden.

14. Verfahren zur Erkennung einer Umgehung (134; 734; 834) einer Verbindung (133; 733; 833) mit einem Telekommunikationsnetzwerk (130; 730; 830) nach einem der vorhergehenden Ansprüche, ferner umfassend:
- Senden einer Mitteilung an die echte Teilnehmernummer, um den echten Teilnehmer darüber zu informieren, dass seine Nummer für einen Test temporär außer Betrieb sein wird.

15. Verfahren zur Erkennung einer Umgehung (834) einer Verbindung (833) mit einem Telekommunikationsnetzwerk (830) nach Anspruch 1,
wobei die Testsonde eine virtuelle Testsonde (832) ist, die auf einem Gerät des echten Teilnehmers installiert ist.

16. System zur Erkennung einer Umgehung (134; 734; 834) einer Verbindung (133; 733; 833) mit einem Telekommunikationsnetzwerk (130; 730; 830), wobei das System umfasst:
- Mittel (110; 210; 310; 410; 510; 610; 710; 810), die angepasst sind, um einen Testanruf (263; 367; 467; 567; 663) bei einer oder durch eine echte Teilnehmernummer eines echten Teilnehmers (131; 231; 331; 431; 531; 631; 731; 831) des Telekommunikationsnetzwerks (130; 730; 830) entstehen zu lassen; und
- ein Steuersystem (140; 240; 340; 440; 540; 640; 740; 840), konfiguriert, um:
• die Initiierung des Testanrufs (263; 367; 467; 567; 663) bei der oder durch die echte Teilnehmernummer zu steuern;
• Anrufdaten (153; 265; 372; 472; 572; 665; 753; 853) von einer Testsonde (132; 232; 332; 432; 532; 632; 732; 832) zu empfangen, an die die echte Teilnehmernummer des echten Teilnehmers (131; 231; 331; 431; 531; 631; 731; 831) während eines Zeitintervalls, in dem der Testanruf (263; 367; 467; 567; 663) gemacht wird, temporär weitergeleitet wird, wobei die Anrufdaten (153; 265; 372; 472; 572; 665; 753; 853) von der Testsonde (132; 232; 332; 432; 532; 632; 732; 832) berichtet werden und eine empfangene Kennung der anrufenden Leitung enthalten, die der Kennung der anrufenden Leitung entspricht, die vom echten Teilnehmer (131; 231; 331; 431; 531; 631; 731; 831) empfangen worden wäre, wenn seine Nummer nicht im Anrufweiterleitungsmodus konfiguriert wäre;
• eine empfangene Kennung der anrufenden Leitung für den Testanruf (263; 367; 467; 567; 663) aus den Anrufdaten (154, 153; 265; 372; 472; 572; 665; 753; 853) zu extrahieren, umfassend das Extrahieren der empfangenen Kennung der anrufenden Leitung aus den Anrufdaten (153; 265; 372; 472; 572; 665; 753; 853), die von der Testsonde (132; 232; 332; 432; 532; 632; 732; 832) berichtet wurden; und
• ein Vorhandensein einer Umgehung (134; 734; 834) durch Analyse der empfangenen Kennung der anrufenden Leitung durch Verifizieren, ob die empfangene Kennung der anrufenden Leitung zum Nummerierungsplan des Telekommunikationsnetzwerks (130; 730; 830) gehört, in dem der Testanruf (263; 367; 467; 567; 663) empfangen wurde, oder durch Verifizieren der Ländervorwahl oder durch Ermitteln, dass die empfangene Kennung der anrufenden Leitung der Kennung der anrufenden Leitung einer Herkunft des Testanrufs (263; 367; 467; 567; 663) nicht entspricht, zu erkennen.

## Revendications

1. Procédé de détection d'un contournement (134 ; 734 ; 834) d'une interconnexion (133 ; 733 ; 833) vers un réseau de télécommunications (130 ; 730 ; 830), comprenant :
- la génération d'un appel test (263 ; 367 ; 467 ; 567 ; 663) à ou via un numéro d'abonné réel d'un abonné réel (131 ; 231 ; 331 ; 431 ; 531 ; 631 ; 731 ; 831) actif dans ledit réseau de télécommunications ;
- l'obtention de données d'appel (153 ; 265 ; 372 ; 472 ; 572 ; 665 ; 753 ; 853) depuis une sonde de test (132 ; 232 ; 332 ; 432 ; 532 ; 632 ; 732 ; 832) à laquelle ledit numéro d'abonné réel dudit abonné réel (131 ; 231 ; 331 ; 431 ; 531 ; 631 ; 731 ; 831) est temporairement transféré pendant un intervalle de temps dans lequel ledit appel test (263 ; 367 ; 467 ; 567 ; 663) est effectué, lesdites données d'appel (153 ; 265 ; 372 ; 472 ; 572 ; 665 ; 753; 853) étant reportées par ladite sonde de test (132 ; 232 ; 332 ; 432 ; 532 ; 632 ; 732 ; 832) et incluant un identifiant de ligne d'appel reçu correspondant à l'identifiant de ligne d'appel qui aurait été reçu par ledit abonné réel (131 ; 231 ; 331 ; 431 ; 531 ; 631 ; 731 ; 831) si son numéro n'avait pas été configuré dans un mode de transfert d'appel ;
- l'extraction d'un identifiant de ligne d'appel reçu pour ledit appel test (263 ; 367 ; 467 ; 567 ; 663) depuis lesdites données d'appel (154, 153 ; 265 ; 372 ; 472 ; 572 ; 665 ; 753 ; 853) comprenant l'extraction dudit identifiant de ligne d'appel reçu depuis lesdites données d'appel (153 ; 265 ; 372 ; 472 ; 572 ; 665 ; 753 ; 853) reportées par ladite sonde de test (132 ; 232 ; 332 ; 432 ; 532 ; 632 ; 732 ; 832) ; et
- la détection de présence d'un contournement (134 ; 734 ; 834) par analyse dudit identifiant de ligne d'appel reçu, en vérifiant si ledit identifiant de ligne d'appel reçu appartient au plan de numérotation dudit réseau de télécommunications (130 ; 730 ; 830) dans lequel ledit appel test (263 ; 367 ; 467 ; 567 ; 663) est reçu, ou en vérifiant le code pays, ou en établissant que ledit identifiant de ligne d'appel reçu ne correspond pas à l'identifiant de ligne d'appel d'une origine dudit appel test (263 ; 367 ; 467 ; 567 ; 663).

2. Procédé de détection d'un contournement (134; 734; 834) d'une interconnexion (133 ; 733 ; 833) vers un réseau de télécommunications (130 ; 730 ; 830) selon la revendication 1,
dans lequel lesdites données d'appel (153 ; 265 ; 372 ; 472 ; 572 ; 665 ; 853) sont obtenues depuis ladite sonde de test (132 ; 232 ; 332 ; 432 ; 532 ; 632 ; 835) dans ledit réseau de télécommunications vers lequel ledit numéro d'abonné réel dudit abonne réel (131 ; 231 ; 331 ; 431 ; 531 ; 631 ; 831) est temporairement transféré pendant un intervalle de temps dans lequel ledit appel test (263 ; 367 ; 467 ; 567 ; 663) est effectué sans intercepter la signalisation d'appels vers ledit numéro d'abonné réel au niveau d'une passerelle.

3. Procédé de détection d'un contournement (134; 734) d'une interconnexion (133 ; 733) vers un réseau de télécommunications (130 ; 730) selon la revendication 2,
dans lequel le transfert temporaire dudit numéro d'abonné réel dudit abonné réel (231) vers ladite sonde de test (232) comprend :
- la transmission d'une commande (261) vers un registre de localisation nominale (HLR) ou registre de localisation des visiteurs (VLR) (290) dudit réseau de télécommunications via une interface de programmation d'application (280) dudit réseau de télécommunications dans lequel ladite commande (261) permet de configurer un transfert d'appel dudit numéro d'abonné réel (231) vers ladite sonde de test (232).

4. Procédé de détection d'un contournement (134; 734) d'une interconnexion (133 ; 733) vers un réseau de télécommunications (130 ; 730) selon la revendication 2,
dans lequel le transfert temporaire dudit numéro d'abonné réel dudit abonné réel (331) vers ladite sonde de test (332) comprend :
- la transmission d'un code USSD spécifique (362) depuis ladite sonde de test (332) ou un quelconque abonnement géré par le système d'appel test vers une passerelle USSD (380) dans ledit réseau de télécommunications, accompagné par une identification dudit numéro d'abonné réel, ledit code USSD spécifique (362) déclenchant une logique spécifique pour configurer un transfert d'appel ; et
- la transmission d'une commande (363) depuis ladite passerelle USSD (380) vers un registre de localisation nominale (HLR) ou un registre de localisation des visiteurs (VLR) (390) dudit réseau de télécommunications, dans lequel ladite commande permet de configurer un transfert d'appel pour ledit numéro d'abonné réel (331) vers ladite sonde de test (332), et
dans lequel ledit procédé comprend en outre la transmission d'instructions (365) depuis ladite sonde de test (332) pour effectuer ledit appel test (367).

5. Procédé de détection d'un contournement (134; 734) d'une interconnexion (133 ; 733) vers un réseau de télécommunications (130 ; 730) selon la revendication 4,
dans lequel ledit procédé comprend en outre :
- la transmission d'un code USSD de désactivation de transfert d'appel spécifique (369) depuis ladite sonde de test (332) à ladite passerelle USSD (380) après ledit appel test (367) ; et
- la transmission d'une commande (370) depuis ladite passerelle USSD (380) audit registre de localisation nominale (HLR) ou un registre de localisation des visiteurs (VLR) (390) dudit réseau de télécommunications, dans lequel ladite commande permet de désactiver ledit transfert d'appel dudit numéro d'abonné réel (331) vers ladite sonde de test (332).

6. Procédé de détection d'un contournement (134; 734) d'une interconnexion (133 ; 733) vers un réseau de télécommunications (130 ; 730) selon la revendication 2,
dans lequel le transfert temporaire dudit numéro d'abonné réel dudit abonné réel (431) vers ladite sonde de test (432) comprend :
- la transmission d'un message SMS (462) avec un code spécifique depuis ladite sonde de test (432) ou un quelconque abonnement géré par le système d'appel test vers un serveur SMS (480) dans ledit réseau de télécommunications, accompagné par une identification dudit numéro d'abonné réel ; et
- la transmission d'une commande (463) depuis ledit serveur SMS (480) vers un registre de localisation nominale (HLR) ou un registre de localisation des visiteurs (VLR) (490) dudit réseau de télécommunications, dans lequel ladite commande (463) permet de configurer un transfert d'appel pour ledit numéro d'abonné réel (431) vers ladite sonde de test (432), et
dans lequel ledit procédé comprend en outre la transmission d'instructions (465) depuis ladite sonde de test (432) pour effectuer ledit appel test (467).

7. Procédé de détection d'un contournement (134; 734) d'une interconnexion (133 ; 733) vers un réseau de télécommunications (130 ; 730) selon la revendication 2,
dans lequel le transfert temporaire dudit numéro d'abonné réel dudit abonné réel (531) vers ladite sonde de test (532) comprend :
- la transmission d'une commande (562) avec un code spécifique depuis ladite sonde de test (531) ou un quelconque abonnement géré par le système d'appel test vers un service de réseau intelligent (580) dans ledit réseau de télécommunications, accompagné par une identification dudit numéro d'abonné réel, dans lequel ledit numéro d'abonné réel est un numéro prépayé ; et
- la transmission d'une commande (563) depuis ledit service de réseau intelligent (580) vers un registre de localisation nominale (HLR) ou un registre de localisation des visiteurs (VLR) (590) dudit réseau de télécommunications, dans lequel ladite commande (563) permet de configurer un transfert d'appel pour ledit numéro d'abonné réel (531) vers ladite sonde de test (532), et
dans lequel ledit procédé comprend en outre la transmission d'instructions (565) depuis ladite sonde de test (532) pour effectuer ledit appel test.

8. Procédé de détection d'un contournement (134; 734) d'une interconnexion (133 ; 733) vers un réseau de télécommunications (130 ; 730) selon la revendication 2,
dans lequel le transfert temporaire dudit numéro d'abonné réel dudit abonné réel (631) vers ladite sonde de test (632) comprend :
- la transmission d'une commande (661) à un registre de localisation nominale (HLR) ou un registre de localisation des visiteurs (VLR) (690) dudit réseau de télécommunications via un serveur de signalisation (680) dudit réseau de télécommunications dans lequel ladite commande (661) permet de configurer un transfert d'appel dudit numéro d'abonné réel (631) vers ladite sonde de test (632).

9. Procédé de détection d'un contournement (134 ; 734) d'une interconnexion (133 ; 733) vers un réseau de télécommunications (130 ; 730) selon l'une quelconque des revendications 4, 6, 7 ou 8, comprenant en outre :
- la transmission d'un code spécifique au sein d'une commande USSD, un message SMS, message IN ou message de signalisation à respectivement une passerelle USSD (380), un serveur SMS (480), service IN (580) ou serveur de signalisation (680) pour obtenir l'état de transfert d'appel dudit numéro d'abonné réel afin de permettre de restaurer ledit état de transfert d'appel ou d'abandonner le test.

10. Procédé de détection d'un contournement (134 ; 734 ; 834) d'une interconnexion (133 ; 733 ; 833) vers un réseau de télécommunications (130 ; 730 ; 830) selon l'une quelconque des revendications 2 à 9, dans lequel le transfert temporaire dudit abonné réel (131 ; 231 ; 331 ; 431 ; 531 ; 631 ; 731 ; 831) vers ladite sonde de test (132 ; 232 ; 332 ; 432 ; 532 ; 632 ; 732 ; 832) comprend l'une des étapes de :
- transfert dudit numéro d'abonné réel (131 ; 231 ; 331 ; 431 ; 531 ; 631 ; 731 ; 831) vers ladite sonde de test (132 ; 232 ; 332 ; 432 ; 532 ; 632 ; 732 ; 832) pendant un intervalle de temps prédéterminé limité ;
- transfert dudit numéro d'abonné réel (131 ; 231 ; 331 ; 431 ; 531 ; 631 ; 731 ; 831) vers ladite sonde de test (132 ; 232 ; 332 ; 432 ; 532 ; 632 ; 732 ; 832) jusqu'à ce que ledit appel test (263 ; 367 ; 467 ; 567 ; 663) soit terminé ; ou
- transfert dudit numéro d'abonné réel (131 ; 231 ; 331 ; 431 ; 531 ; 631 ; 731 ; 831) vers ladite sonde de test (132 ; 232 ; 332 ; 432 ; 532 ; 632 ; 732 ; 832) jusqu'à ce que ledit appel test (263 ; 367 ; 467 ; 567 ; 663) soit terminé ou qu'un minuteur prédéterminé expire, en fonction de la première condition réalisée.

11. Procédé de détection d'un contournement (134; 734; 834) d'une interconnexion (133 ; 733 ; 833) vers un réseau de télécommunications (130 ; 730 ; 830) selon l'une quelconque des revendications précédentes, comprenant en outre :
- la sélection dudit numéro d'abonné réel dudit abonné réel (131 ; 231 ; 331 ; 431 ; 531 ; 631 ; 731 ; 831) depuis une liste intelligente d'abonnés réels reçue depuis ledit opérateur dudit réseau de télécommunications (130 ; 730 : 830).

12. Procédé de détection d'un contournement (134; 734; 834) d'une interconnexion (133 ; 733 ; 833) vers un réseau de télécommunications (130 ; 730 ; 830) selon la revendication 11, dans lequel ladite liste intelligente comprend l'un ou plusieurs parmi :
- des numéros d'abonnés d'abonnés réels dudit réseau de télécommunications (130 ; 730 ; 830) qui ont reçu dans un passé récent une quantité d'appels internationaux dépassant un certain seuil ;
- des numéros d'abonnés recyclés d'abonnés réels dudit réseau de télécommunications (130; 730; 830) qui se sont récemment désabonnés dudit réseau de télécommunications (130 ; 730 ; 830) ;
- des numéros d'abonnés qui constituent une partie d'une nouvelle plage de numéros d'abonnées réels mais encore inutilisés parmi ledit réseau de télécommunications (130 ; 730 ; 830) ;
- des numéros d'abonnés d'abonnés réels dudit réseau de télécommunications (130; 730; 830) qui n'ont jamais été configurés dans un mode de transfert d'appel.

13. Procédé de détection d'un contournement (134; 734; 834) d'une interconnexion (133 ; 733 ; 833) vers un réseau de télécommunications (130 ; 730 ; 830) selon la revendication 11 ou 12, dans lequel certains abonnés réels à profil élevé dudit réseau de télécommunications (130; 730; 830) ont été retirés de ladite liste intelligente.

14. Procédé de détection d'un contournement (134; 734; 834) d'une interconnexion (133 ; 733 ; 833) vers un réseau de télécommunications (130 ; 730 ; 830) selon l'une quelconque des revendications précédentes, comprenant en outre :
- l'envoi d'un message audit numéro d'abonné réel pour informer ledit abonné réel que son numéro sera temporairement mis hors service pour un test.

15. Procédé de détection d'un contournement (834) d'une interconnexion (833) vers un réseau de télécommunications (830) selon la revendication 1,
dans lequel ladite sonde de test est une sonde de test virtuelle (832) installée sur un appareil dudit abonné réel.

16. Système de détection d'un contournement (134 ; 734 ; 834) d'une interconnexion (133 ; 733 ; 833) vers un réseau de télécommunications (130 ; 730 ; 830) dudit système comprenant :
- un moyen (110 ; 210 ; 310 ; 410 ; 510 ; 610 ; 710 ; 810) adapté pour émettre un appel test (263 ; 367 ; 467 ; 567 ; 663) à ou via un numéro d'abonné réel d'un abonné réel (131; 231 ; 331 ; 431 ; 531 ; 631 ; 731 ; 831) dudit réseau de télécommunications (130 ; 730 ; 830) ; et
- un système de commande (140 ; 240 ; 340 ; 440 ; 540 ; 640 ; 740 ; 840) configuré pour :
• commander l'initiation dudit appel test (263 ; 367 ; 467 ; 567 ; 663) à ou via ledit numéro d'abonné réel ;
• recevoir des données d'appel (153 ; 265 ; 372 ; 472 ; 572 ; 665 ; 753 ; 853) depuis une sonde de test (132 ; 232 ; 332 ; 432 ; 532 ; 632 ; 732 ; 832) à laquelle ledit numéro d'abonné réel dudit abonné réel (131 ; 231 ; 331 ; 431 ; 531 ; 631 ; 731 ; 831) est temporairement transféré pendant un intervalle de temps dans lequel ledit appel test (263 ; 367 ; 467 ; 567 ; 663) est effectué, lesdites données d'appel (153 ; 265 ; 372 ; 472 ; 572 ; 665 ; 753; 853) étant reportées par ladite sonde de test (132 ; 232 ; 332 ; 432 ; 532 ; 632 ; 732 ; 832) et incluant un identifiant de ligne d'appel reçu correspondant à l'identifiant de ligne d'appel qui aurait été reçu par ledit abonné réel (131 ; 231 ; 331 ; 431 ; 531 ; 631 ; 731 ; 831) si son numéro n'avait pas été configuré dans un mode de transfert d'appel ;
• extraire un identifiant de ligne d'appel reçu pour ledit appel test (263 ; 367 ; 467 ; 567 ; 663) depuis lesdites données d'appel (154, 153 ; 265 ; 372 ; 472 ; 572 ; 665 ; 753 ; 853) comprenant l'extraction dudit identifiant de ligne d'appel reçu depuis lesdites données d'appel (153 ; 265 ; 372 ; 472 ; 572 ; 665 ; 753 ; 853) reportées par ladite sonde de test (132 ; 232 ; 332 ; 432 ; 532 ; 632 ; 732 ; 832) ; et
• détecter la présence d'un contournement (134 ; 734 ; 834) par analyse dudit identifiant de ligne d'appel reçu, en vérifiant si ledit identifiant de ligne d'appel reçu appartient au plan de numérotation dudit réseau de télécommunications (130 ; 730 ; 830) dans lequel ledit appel test (263 ; 367 ; 467 ; 567 ; 663) est reçu, ou en vérifiant le code pays, ou en établissant que ledit identifiant de ligne d'appel reçu ne correspond pas à l'identifiant de ligne d'appel d'une origine dudit appel test (263 ; 367 ; 467 ; 567 ; 663).
